# EUROPEAN PATENT APPLICATION

(11) **EP 4 637 194 A1**
(43) Date of publication of application: **22.10.2025**
(21) Application number: 23914606.1
(22) Date of filing: 29.12.2023
(51) Int. Cl.: H04W 8/26

(54) **COMMUNICATION METHOD, APPARATUS, AND SYSTEM**

(30) Priority: 06.01.2023 CN 202310019320
(71) Applicant: Huawei Technologies Co., Ltd., Shenzhen, Guangdong 518129 (CN)
(72) Inventor: DENG, Taoyu, Shenzhen, Guangdong 518129 (CN); LI, Yongcui, Shenzhen, Guangdong 518129 (CN); NI, Hui, Shenzhen, Guangdong 518129 (CN)
(74) Representative: Isarpatent
(86) International application number: PCT/CN2023/143433
(87) International publication number: WO 2024/146475

(57) **Abstract**

This application provides a communication method, apparatus, and system. In the method, an SMF network element may send an address of a terminal device and an address of the SMF network element to a central network element; and the central network element is configured to provide the address of the SMF network element for an NEF network element based on the address of the terminal device. The NEF network element may query the address of the SMF network element from the central network element, and forward first information from an AF network element to the SMF network element, where the first information indicates a service requirement related to a session of the terminal device. The method may be applied to an HR roaming scenario, so that the first information can be directly sent by the NEF network element to the SMF network element, instead of being sent by the NEF network element to the SMF network element through a PCF network element. In this way, the first information can be transmitted from the AF network element to the SMF network element in a network including the HR roaming scenario, so that quality of service of a service in the network including the HR roaming scenario is improved.

## Description

This application claims priority to Chinese Patent Application No. 202310019320.0, filed with the China National Intellectual Property Administration on January 6, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

When edge computing (edge computing, EC) is deployed, an application function (application function, AF) network element serving as an edge application may send a request to a session management function (session management function, SMF) network element, to implement operations such as policy update and traffic routing update related to a session of a terminal device, so as to ensure quality of service of a service.

There are network scenarios including a non-roaming scenario, a local breakout (local breakout, LBO) roaming scenario, and a home routed (home routed, HR) roaming scenario. In the non-roaming scenario or the LBO roaming scenario, an AF network element sends a request to an SMF network element in a serving (serving) public land mobile network (public land mobile network, PLMN) via a network exposure function (network exposure function, NEF) network element and a policy control function (policy control function, PCF) network element in the serving PLMN. In the HR roaming scenario, there is no PCF network element that can forward a request from an AF network element in a serving PLMN. In a network including the HR roaming scenario, quality of service of a service cannot be ensured.

### SUMMARY

Embodiments of this application provide a communication method, apparatus, and system, to improve quality of service of a service in a network including an HR roaming scenario.

According to a first aspect, an embodiment of this application provides a communication method. The method may be applied to an SMF network element, or may be applied to a chip in an SMF network element, or may be applied to a logical module or software that can implement all or some functions of an SMF network element. The following uses the SMF network element as an example for description. The method includes: The SMF network element sends an address of a terminal device and an address of the SMF network element to a central network element; the central network element provides the address of the SMF network element for an NEF network element based on the address of the terminal device; and the SMF network element receives first information forwarded by the NEF network element from an AF network element, where the first information indicates a service requirement related to a session of the terminal device.

It can be learned that, in the communication method, the SMF network element may store the address of the terminal device and the address of the SMF network element in the central network element. In this way, the NEF network element can obtain the address of the SMF network element from the central network element, so that the NEF network element can send the first information to the SMF network element. In this way, the first information can be transmitted from the AF network element to the SMF network element, so that the SMF network element can serve the session of the terminal device based on the first information, thereby ensuring quality of service of a service. When the method is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

In an optional implementation, the NEF network element is configured to obtain the address of the SMF network element from the central network element based on the address of the terminal device, and forward the first information to the SMF network element.

In an optional implementation, the method further includes: The SMF network element receives the address of the terminal device forwarded by the NEF network element from the AF network element. In this implementation, the SMF network element can learn of the terminal device that the AF network element expects the SMF network element to serve, so that after receiving the first information, the SMF network element can serve the session of the terminal device based on the first information, to ensure quality of service of a service.

In an optional implementation, the central network element is configured to store a correspondence between the address of the terminal device and the address of the SMF network element. In this implementation, the central network element can determine, based on the address of the terminal device, the address of the SMF network element corresponding to the address of the terminal device, so as to provide the address of the SMF network element for the NEF network element.

In an optional implementation, the terminal device is in an HR roaming state; and that the SMF network element sends the address of the terminal device and the address of the SMF network element to the central network element includes: The SMF network element sends the address of the terminal device and the address of the SMF network element to the central network element based on the HR roaming state of the terminal device. This implementation helps enable the NEF network element to obtain the address of the SMF network element through query when the terminal device is in the HR roaming state, so as to send the first information to the SMF network element, thereby helping improve quality of service of a service in a network including an HR roaming scenario.

Optionally, the method further includes: The SMF network element determines that the terminal device is in the HR roaming state.

In another optional implementation, before the SMF network element sends the address of the terminal device and the address of the SMF network element to the central network element, the method further includes: The SMF network element receives an address of a second SMF network element from an access and mobility management function (access and mobility management function, AMF) network element, where the second SMF network element is configured to serve the session of the terminal device. In other words, that the SMF network element receives the address of the second SMF network element from the AMF network element is used as a trigger condition for the SMF network element to perform the operation of sending the address of the terminal device and the address of the SMF network element to the central network element. That the SMF network element receives the address of the second SMF network element from the AMF network element may indicate that the terminal device is in the HR roaming state. This implementation helps enable the NEF network element to obtain the address of the SMF network element through query when the terminal device is in the HR roaming state, so as to send first information to the SMF network element, thereby helping improve quality of service of a service in a network including an HR roaming scenario.

In an optional implementation, the method further includes: The SMF network element obtains the address of the terminal device from the second SMF network element. In this manner, the SMF network element can obtain the address of the terminal device to be sent to the central network element.

In an optional implementation, the SMF network element and the central network element belong to a same PLMN.

In an optional implementation, that the SMF network element sends the address of the terminal device and the address of the SMF network element to the central network element includes: The SMF network element sends the address of the terminal device and the address of the SMF network element to the central network element through a second NEF network element.

In an optional implementation, the method further includes: The SMF network element sends the first information to the second SMF network element, where the second SMF network element and the SMF network element belong to different PLMNs, and the second SMF network element is configured to serve the session of the terminal device.

According to a second aspect, an embodiment of this application provides a communication method. The method may be applied to an NEF network element, or may be applied to a chip in an NEF network element, or may be applied to a logical module or software that can implement all or some functions of an NEF network element. The following uses the NEF network element as an example for description. The method includes: The NEF network element receives first information from an AF network element, where the first information indicates a service requirement related to a session of a terminal device; the NEF network element queries an address of an SMF network element from a central network element based on an address of the terminal device; and the NEF network element sends the first information to the SMF network element.

It can be learned that, in the communication method, the NEF network element can obtain the address of the SMF network element through query from the central network element, so that the first information can be transmitted from the AF network element to the SMF network element through the NEF network element, and the SMF network element can serve the session of the terminal device based on the first information, thereby ensuring quality of service of a service. When the method is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

In an optional implementation, before the NEF network element queries the address of the SMF network element from the central network element based on the address of the terminal device, the method further includes: The NEF network element determines that the terminal device is in an HR roaming state. In other words, that the NEF network element determines that the terminal device is in the HR roaming state is used as a trigger condition for the operation that the NEF network element queries the address of the SMF network element from the central network element based on the address of the terminal device. The SMF network element may store the address of the SMF network element in the central network element only when the terminal device is in the HR roaming state. In this case, when the terminal device is in a state other than the HR roaming state, the NEF network element cannot obtain the address of the SMF network element through query from the central network element. In this implementation, when the terminal device is in a state other than the HR roaming state, the NEF network element may not perform the operation of querying the address of the SMF network element from the central network element, thereby reducing signaling overheads.

According to a third aspect, an embodiment of this application provides a communication method. The method may be applied to an NEF network element, or may be applied to a chip in an NEF network element, or may be applied to a logical module or software that can implement all or some functions of an NEF network element. The following uses the NEF network element as an example for description. The method includes: The NEF network element receives first information from an AF network element, where the first information indicates a service requirement related to a session of a terminal device; and the NEF network element sends the first information to an SMF network element.

That the NEF network element sends the first information to the SMF network element includes: The NEF network element sends the first information to the SMF network element via a PCF network element, where the terminal device is in a non-roaming state, or the terminal device is in an LBO roaming state, or the terminal device supports an LBO roaming type.

Alternatively, that the NEF network element sends the first information to the SMF network element includes: The NEF network element sends the first information to the SMF network element via a third NEF network element, a second PCF network element, and a second SMF network element, where the terminal device is in an HR roaming state, or the terminal device supports an HR roaming type.

Alternatively, that the NEF network element sends the first information to the SMF network element includes: The NEF network element sends the first information to the SMF network element via a PCF network element, and sends the first information to the SMF network element via a third NEF network element, a second PCF network element, and a second SMF network element, where the terminal device supports an LBO roaming type and an HR roaming type.

It can be learned that, the communication method provides a transmission path for transmitting the first information from the NEF network element to the SMF network element when the terminal device is in each state or the terminal device supports each roaming type, to ensure that the first information can be transmitted from the AF network element to the SMF network element when the terminal device is in each state or the terminal device supports each roaming type, so that the SMF network element can serve the session of the terminal device based on the first information, thereby improving quality of service of a service. The transmission path provided in the communication method includes a path for transmitting the first information from the NEF network element to the SMF network element when the terminal device is in the HR roaming state or the roaming type supported by the terminal device includes the HR roaming type. This helps transmit the first information from the AF network element to the SMF network element in a network including an HR roaming scenario, thereby improving quality of service of a service in the network including the HR roaming scenario.

In an optional implementation, the NEF network element, the PCF network element, and the SMF network element belong to a first PLMN, the third NEF network element, the second PCF network element, and the second SMF network element belong to a second PLMN, and the first PLMN is different from the second PLMN.

In an optional implementation, an address of the terminal device in the non-roaming state or the LBO roaming state belongs to an address segment corresponding to the first PLMN; or an address of the terminal device in the HR roaming state does not belong to an address segment corresponding to the first PLMN.

In an optional implementation, the method further includes: If the address of the terminal device belongs to the address segment corresponding to the first PLMN, the NEF network element determines that the terminal device is in the non-roaming state or the LBO roaming state. If the address of the terminal device does not belong to the address segment corresponding to the first PLMN, the NEF network element determines that the terminal device is in the HR roaming state. It can be learned that, the NEF network element may determine a status of the terminal device by determining whether the address of the terminal device belongs to the address segment corresponding to the first PLMN.

In an optional implementation, the terminal device is in the non-roaming state or the LBO roaming state, and the method further includes: The NEF network element obtains, through query, an address of a binding support function (binding support function, BSF) network element from a network repository function (network repository function, NRF) network element based on the address of the terminal device, where the BSF network element is configured to provide an address of a PCF network element for the NEF network element based on the address of the terminal device. It can be learned that, when the terminal device is in the non-roaming state or the LBO roaming state, the NEF network element can successfully obtain the address of the BSF network element through query. This helps enable the NEF network element to obtain the address of the PCF network element from the BSF network element, so that the first information can be transmitted by the NEF network element to the SMF network element through the PCF network element. This helps ensure quality of service of a service when the terminal device is in the non-roaming state or the LBO roaming state.

Alternatively, the terminal device is in the HR roaming state, and the method further includes: The NEF network element obtains, through query, no address of a BSF network element from an NRF network element based on the address of the terminal device. In other words, when the terminal device is in the HR roaming state, the NEF network element cannot successfully obtain the address of the BSF network element through query from the NRF network element.

In an optional implementation, the method further includes: If the NEF network element obtains the address of the BSF network element through query from the NRF network element based on the address of the terminal device, the NEF network element determines that the terminal device is in the non-roaming state or the LBO roaming state. If the NEF network element does not obtain the address of the BSF network element through query from the NRF network element based on the address of the terminal device, the NEF network element determines that the terminal device is in the HR roaming state. It can be learned that, the NEF network element may determine a status of the terminal device by determining whether the address of the BSF network element is obtained through query from the NRF network element.

In an optional implementation, the terminal device is in the non-roaming state or the LBO roaming state, and the method further includes: The NEF network element obtains an address of a PCF network element through query from a BSF network element based on the address of the terminal device. It can be learned that, when the terminal device is in the non-roaming state or the LBO roaming state, the NEF network element can successfully obtain the address of the PCF network element through query, so that the first information can be transmitted by the NEF network element to the SMF network element through the PCF network element. This helps ensure quality of service of a service when the terminal device is in the non-roaming state or the LBO roaming state.

Alternatively, the terminal device is in the HR roaming state, and the method further includes: The NEF network element obtains, through query, no address of a PCF network element from a BSF network element based on the address of the terminal device. In other words, when the terminal device is in the HR roaming state, the NEF network element cannot successfully obtain the address of the PCF network element through query from the BSF network element.

In an optional implementation, the method further includes: If the NEF network element obtains the address of the PCF network element through query from the BSF network element based on the address of the terminal device, the NEF network element determines that the terminal device is in the non-roaming state or the LBO roaming state. If the NEF network element does not obtain the address of the PCF network element through query from the BSF network element based on the address of the terminal device, the NEF network element determines that the terminal device is in the HR roaming state. It can be learned that, the NEF network element may determine a status of the terminal device by determining whether the address of the PCF network element is obtained through query from the BSF network element.

In an optional implementation, the method further includes: The NEF network element obtains, through query from a unified data management (unified data management, UDM) network element, a roaming type supported by the terminal device.

In an optional implementation, the roaming type supported by the terminal device is a roaming type supported by a data network (data network, DN) that the terminal device is allowed to access; and that the NEF network element obtains, through query from the UDM network element, the roaming type supported by the terminal device includes: The NEF network element obtains, through query from the UDM network element based on a name of the DN, the roaming type supported by the DN.

According to a fourth aspect, an embodiment of this application provides a communication method. The method includes: An SMF network element sends an address of a terminal device and an address of the SMF network element to a central network element; an NEF network element obtains the address of the SMF network element from the central network element based on the address of the terminal device, and forwards first information from an AF network element to the SMF network element, where the first information indicates a service requirement related to a session of the terminal device; and the SMF network element receives the first information from the NEF network element.

It can be learned that, in the communication method, the SMF network element may store the address of the terminal device and the address of the SMF network element in the central network element. The NEF network element can obtain the address of the SMF network element from the central network element, to send the first information to the SMF network element. In this way, the first information can be transmitted from the AF network element to the SMF network element, so that the SMF network element can serve the session of the terminal device based on the first information, thereby ensuring quality of service of a service. When the method is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

In an optional implementation, the terminal device is in an HR roaming state; and that the SMF network element sends the address of the terminal device and the address of the SMF network element to the central network element includes: The SMF network element sends the address of the terminal device and the address of the SMF network element to the central network element based on the HR roaming state of the terminal device.

Optionally, the method further includes: The SMF network element determines that the terminal device is in the HR roaming state.

In an optional implementation, before the SMF network element sends the address of the terminal device and the address of the SMF network element to the central network element, the method further includes: The SMF network element receives an address of a second SMF network element from an AMF network element, where the second SMF network element is configured to serve the session of the terminal device.

Optionally, the method further includes: The SMF network element obtains the address of the terminal device from the second SMF network element.

In an optional implementation, that the SMF network element sends the address of the terminal device and the address of the SMF network element to the central network element includes: The SMF network element sends the address of the terminal device and the address of the SMF network element to the central network element through a second NEF network element.

In an optional implementation, before the NEF network element obtains the address of the SMF network element from the central network element based on the address of the terminal device, the method further includes: The central network element stores a correspondence between the address of the terminal device and the address of the SMF network element.

In an optional implementation, before the NEF network element queries the address of the SMF network element from the central network element based on the address of the terminal device, the method further includes: The NEF network element determines that the terminal device is in an HR roaming state.

In an optional implementation, the method further includes: The central network element provides the address of the SMF network element for the NEF network element based on the address of the terminal device.

In an optional implementation, the method further includes: The SMF network element sends the first information to the second SMF network element, where the second SMF network element and the SMF network element belong to different PLMNs, and the second SMF network element is configured to serve the session of the terminal device.

In an optional implementation, the method further includes: The SMF network element receives the address of the terminal device forwarded by the NEF network element from the AF network element.

In an optional implementation, the SMF network element and the central network element belong to a same PLMN.

In addition, in this aspect, for beneficial effects of the foregoing optional implementations, refer to beneficial effects of related implementations in the first aspect and the second aspect. Details are not described again.

According to a fifth aspect, an embodiment of this application provides a communication method. The method includes: An NEF network element receives first information from an AF network element, where the first information indicates a service requirement related to a session of a terminal device; the NEF network element sends the first information to an SMF network element; and the SMF network element receives the first information from the NEF network element.

That the NEF network element sends the first information to the SMF network element includes: The NEF network element sends the first information to the SMF network element via a PCF network element, where the terminal device is in a non-roaming state, or the terminal device is in a local breakout LBO roaming state, or the terminal device supports an LBO roaming type.

Alternatively, that the NEF network element sends the first information to the SMF network element includes: The NEF network element sends the first information to the SMF network element via a third NEF network element, a second PCF network element, and a second SMF network element, where the terminal device is in a home routed HR roaming state, or the terminal device supports an HR roaming type.

Alternatively, that the NEF network element sends the first information to the SMF network element includes: The NEF network element sends the first information to the SMF network element via a PCF network element, and sends the first information to the SMF network element via a third NEF network element, a second PCF network element, and a second SMF network element, where the terminal device supports an LBO roaming type and an HR roaming type.

It can be learned that, the communication method provides a transmission path for transmitting the first information from the NEF network element to the SMF network element when the terminal device is in each state or the terminal device supports each roaming type, to ensure that the first information can be transmitted from the AF network element to the SMF network element when the terminal device is in each state or the terminal device supports each roaming type, so that the SMF network element can serve the session of the terminal device based on the first information, thereby improving quality of service of a service. The transmission path provided in the communication method includes a path for transmitting the first information from the NEF network element to the SMF network element when the terminal device is in the HR roaming state or the roaming type supported by the terminal device includes the HR roaming type. This helps transmit the first information from the AF network element to the SMF network element in a network including an HR roaming scenario, thereby improving quality of service of a service in the network including the HR roaming scenario.

In an optional implementation, the NEF network element, the PCF network element, and the SMF network element belong to a first PLMN, the third NEF network element, the second PCF network element, and the second SMF network element belong to a second PLMN, and the first PLMN is different from the second PLMN.

In an optional implementation, an address of the terminal device in the non-roaming state or the LBO roaming state belongs to an address segment corresponding to the first PLMN; or an address of the terminal device in the HR roaming state does not belong to an address segment corresponding to the first PLMN.

In an optional implementation, the method further includes: If the address of the terminal device belongs to the address segment corresponding to the first PLMN, the NEF network element determines that the terminal device is in the non-roaming state or the LBO roaming state. If the address of the terminal device does not belong to the address segment corresponding to the first PLMN, the NEF network element determines that the terminal device is in the HR roaming state.

In an optional implementation, the terminal device is in the non-roaming state or the LBO roaming state, and the method further includes: The NEF network element obtains, through query, an address of a binding support function BSF network element from an NRF network element based on the address of the terminal device, where the BSF network element is configured to provide an address of a PCF network element for the NEF network element based on the address of the terminal device. Alternatively, the terminal device is in the HR roaming state, and the method further includes: The NEF network element obtains, through query, no address of a BSF network element from an NRF network element based on the address of the terminal device.

In an optional implementation, the method further includes: If the NEF network element obtains the address of the BSF network element through query from the NRF network element based on the address of the terminal device, the NEF network element determines that the terminal device is in the non-roaming state or the LBO roaming state. If the NEF network element does not obtain the address of the BSF network element through query from the NRF network element based on the address of the terminal device, the NEF network element determines that the terminal device is in the HR roaming state.

In an optional implementation, the terminal device is in the non-roaming state or the LBO roaming state, and the method further includes: The NEF network element obtains, through query, an address of a PCF network element from a BSF network element based on the address of the terminal device. Alternatively, the terminal device is in the HR roaming state, and the method further includes: The NEF network element obtains, through query, no address of a PCF network element from a BSF network element based on the address of the terminal device.

In an optional implementation, the method further includes: If the NEF network element obtains the address of the PCF network element through query from the BSF network element based on the address of the terminal device, the NEF network element determines that the terminal device is in the non-roaming state or the LBO roaming state. If the NEF network element does not obtain the address of the PCF network element through query from the BSF network element based on the address of the terminal device, the NEF network element determines that the terminal device is in the HR roaming state.

In an optional implementation, the method further includes: The NEF network element obtains, through query from a UDM network element, a roaming type supported by the terminal device.

In an optional implementation, the roaming type supported by the terminal device is a roaming type supported by a DN that the terminal device is allowed to access; and that the NEF network element obtains, through query from the UDM network element, the roaming type supported by the terminal device includes: The NEF network element obtains, through query from the UDM network element based on a name of the DN, the roaming type supported by the DN.

In addition, in this aspect, for beneficial effects of the foregoing optional implementations, refer to beneficial effects of related implementations in the third aspect. Details are not described again.

According to a sixth aspect, an embodiment of this application provides a communication system. The system includes an SMF network element and an NEF network element. The SMF network element is configured to send an address of a terminal device and an address of the SMF network element to a central network element. The NEF network element is configured to obtain the address of the SMF network element from the central network element based on the address of the terminal device, and forward first information from an application function AF network element to the SMF network element, where the first information indicates a service requirement related to a session of the terminal device. The SMF network element is further configured to receive the first information from the NEF network element.

It can be learned that, in the communication system, the NEF network element can obtain the address of the SMF network element from the central network element, so that the NEF network element can send the first information to the SMF network element. In this way, the first information can be transmitted from the AF network element to the SMF network element, so that the SMF network element can serve the session of the terminal device based on the first information, thereby ensuring quality of service of a service. When the system is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

In an optional implementation, the terminal device is in an HR roaming state. When the SMF network element sends the address of the terminal device and the address of the SMF network element to the central network element, the SMF network element is specifically configured to send the address of the terminal device and the address of the SMF network element to the central network element based on the HR roaming state of the terminal device.

Optionally, the SMF network element is further configured to determine that the terminal device is in the HR roaming state.

In an optional implementation, the SMF network element is further configured to receive an address of a second SMF network element from an AMF network element. The second SMF network element is configured to serve the session of the terminal device.

Optionally, the system further includes the AMF network element, and the AMF network element is configured to send the address of the second SMF network element to the SMF network element.

Optionally, the SMF network element is further configured to obtain the address of the terminal device from the second SMF network element.

In an optional implementation, when sending the address of the terminal device and the address of the SMF network element to the central network element, the SMF network element is specifically configured to send the address of the terminal device and the address of the SMF network element to the central network element through a second NEF network element.

In an optional implementation, the system further includes the central network element, and the central network element is configured to store a correspondence between the address of the terminal device and the address of the SMF network element.

In an optional implementation, the NEF network element is further configured to: before obtaining the address of the SMF network element from the central network element based on the address of the terminal device, determine that the terminal device is in the HR roaming state.

In an optional implementation, the central network element is further configured to provide the address of the SMF network element for the NEF network element based on the address of the terminal device.

In an optional implementation, the SMF network element is further configured to send the first information to the second SMF network element, where the second SMF network element and the SMF network element belong to different PLMNs, and the second SMF network element is configured to serve the session of the terminal device.

In an optional implementation, the SMF network element is further configured to receive the address of the terminal device forwarded by the NEF network element from the AF network element.

In an optional implementation, the SMF network element and the central network element belong to a same PLMN.

In addition, in this aspect, for beneficial effects of the foregoing optional implementations, refer to beneficial effects of related implementations in the first aspect and the second aspect. Details are not described again.

According to a seventh aspect, an embodiment of this application provides a communication system. The system includes an AF network element and an NEF network element. The AF network element is configured to send first information to the NEF network element, where the first information indicates a service requirement related to a session of a terminal device. The NEF network element is configured to receive the first information from the AF network element. The NEF network element is further configured to query an address of a session management function SMF network element from a central network element based on an address of the terminal device, and send the first information to the SMF network element.

It can be learned that, in the system, the NEF network element can obtain the address of the SMF network element through query from the central network element, so that the first information can be transmitted from the AF network element to the SMF network element through the NEF network element, and the SMF network element can serve the session of the terminal device based on the first information, thereby ensuring quality of service of a service. When the system is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

In an optional implementation, the system further includes the central network element, and the central network element is configured to provide the address of the SMF network element for the NEF network element based on the address of the terminal device.

In an optional implementation, the system further includes the SMF network element, and the SMF network element is configured to send the address of the terminal device and the address of the SMF network element to the central network element. The central network element is further configured to store a correspondence between the address of the terminal device and the address of the SMF network element.

In an optional implementation, the terminal device is in an HR roaming state. When the SMF network element sends the address of the terminal device and the address of the SMF network element to the central network element, the SMF network element is specifically configured to send the address of the terminal device and the address of the SMF network element to the central network element based on the HR roaming state of the terminal device.

Optionally, the SMF network element is further configured to determine that the terminal device is in the HR roaming state.

In an optional implementation, the SMF network element is further configured to: before sending the address of the terminal device and the address of the SMF network element to the central network element, receive an address of a second SMF network element from an AMF network element. The second SMF network element is configured to serve the session of the terminal device.

Optionally, the SMF network element is further configured to obtain the address of the terminal device from the second SMF network element.

In an optional implementation, when sending the address of the terminal device and the address of the SMF network element to the central network element, the SMF network element is specifically configured to send the address of the terminal device and the address of the SMF network element to the central network element through a second NEF network element.

In an optional implementation, the NEF network element is further configured to: before obtaining the address of the SMF network element from the central network element based on the address of the terminal device, determine that the terminal device is in the HR roaming state.

In an optional implementation, the SMF network element is further configured to send the first information to the second SMF network element, where the second SMF network element and the SMF network element belong to different PLMNs, and the second SMF network element is configured to serve the session of the terminal device.

In an optional implementation, the SMF network element is further configured to receive the address of the terminal device forwarded by the NEF network element from the AF network element.

In an optional implementation, the SMF network element and the central network element belong to a same PLMN.

In addition, in this aspect, for beneficial effects of the foregoing optional implementations, refer to beneficial effects of related implementations in the first aspect and the second aspect. Details are not described again.

According to an eighth aspect, an embodiment of this application provides a communication system. The system includes an SMF network element and an NEF network element. The NEF network element is configured to receive first information from an AF network element, where the first information indicates a service requirement related to a session of a terminal device. The NEF network element is further configured to send the first information to the SMF network element. The SMF network element is configured to receive the first information from the NEF network element.

When sending the first information to the SMF network element, the NEF network element is specifically configured to send the first information to the SMF network element via a PCF network element, where the terminal device is in a non-roaming state, or the terminal device is in an LBO roaming state, or the terminal device supports an LBO roaming type.

Alternatively, when sending the first information to the SMF network element, the NEF network element is specifically configured to send the first information to the SMF network element via a third NEF network element, a second PCF network element, and a second SMF network element, where the terminal device is in an HR roaming state, or the terminal device supports an HR roaming type.

Alternatively, when sending the first information to the SMF network element, the NEF network element is specifically configured to send the first information to the SMF network element via a PCF network element, and send the first information to the SMF network element via a third NEF network element, a second PCF network element, and a second SMF network element, where the terminal device supports an LBO roaming type and an HR roaming type.

It can be learned that, in the communication system, when the terminal device is in each state or the terminal device supports each roaming type, the first information can be transmitted from the NEF network element to the SMF network element, so that the SMF network element can serve the session of the terminal device based on the first information, thereby improving quality of service of a service. In the system, when the terminal device is in the HR roaming state or the roaming type supported by the terminal device includes the HR roaming type, the first information is transmitted from the NEF network element to the SMF network element, thereby improving quality of service of a service in a network including an HR roaming scenario.

In an optional implementation, the NEF network element, the PCF network element, and the SMF network element belong to a first PLMN, the third NEF network element, the second PCF network element, and the second SMF network element belong to a second PLMN, and the first PLMN is different from the second PLMN.

In an optional implementation, the NEF network element is further configured to: if the address of the terminal device belongs to an address segment corresponding to the first PLMN, determine that the terminal device is in the non-roaming state or the LBO roaming state; or if the address of the terminal device does not belong to an address segment corresponding to the first PLMN, determine that the terminal device is in the HR roaming state.

In an optional implementation, the NEF network element is further configured to: if an address of a BSF network element is obtained through query from an NRF network element based on the address of the terminal device, determine that the terminal device is in the non-roaming state or the LBO roaming state; or if an address of a BSF network element is not obtained through query from an NRF network element based on the address of the terminal device, determine that the terminal device is in the HR roaming state.

In an optional implementation, the NEF network element is further configured to: if an address of a PCF network element is obtained through query from a BSF network element based on the address of the terminal device, determine, by the NEF network element, that the terminal device is in the non-roaming state or the LBO roaming state; or if an address of a PCF network element is not obtained through query from a BSF network element based on the address of the terminal device, determine, by the NEF network element, that the terminal device is in the HR roaming state.

In an optional implementation, the NEF network element is further configured to obtain, through query from a UDM network element, a roaming type supported by the terminal device.

In an optional implementation, the roaming type supported by the terminal device is a roaming type supported by a DN that the terminal device is allowed to access; and when obtaining, through query from the UDM network element, the roaming type supported by the terminal device, the NEF network element is specifically configured to obtain, through query from the UDM network element based on a name of the DN, the roaming type supported by the DN.

In addition, in this aspect, for beneficial effects of the foregoing optional implementations, refer to beneficial effects of related implementations in the third aspect. Details are not described again.

According to a ninth aspect, an embodiment of this application provides a communication system. The system includes an NEF network element, a PCF network element, and an SMF network element. The NEF network element is configured to receive first information from an AF network element, where the first information indicates a service requirement related to a session of a terminal device. The NEF network element is further configured to send the first information to the PCF network element. The PCF network element is configured to receive the first information from the NEF network element, and send the first information to the SMF network element. The SMF network element is configured to receive the first information from the NEF network element. The terminal device is in a non-roaming state, or the terminal device is in an LBO roaming state, or the terminal device supports an LBO roaming type.

It can be learned that, in the communication system, when the terminal device is in the non-roaming state or the LBO roaming state, or the terminal device supports the LBO roaming type, the first information from the AF network element can be transmitted from the NEF network element to the SMF network element, so that the SMF network element can serve the session of the terminal device based on the first information, thereby improving quality of service of a service.

In an optional implementation, the NEF network element, the PCF network element, and the SMF network element belong to a first PLMN.

In an optional implementation, the NEF network element is further configured to: when an address of the terminal device belongs to an address segment corresponding to the first PLMN, determine that the terminal device is in the non-roaming state or the LBO roaming state.

In an optional implementation, the NEF network element is further configured to: when obtaining an address of a BSF network element through query from an NRF network element based on the address of the terminal device, determine that the terminal device is in the non-roaming state or the LBO roaming state.

In an optional implementation, the NEF network element is further configured to: when obtaining an address of the PCF network element through query from a BSF network element based on the address of the terminal device, determine, by the NEF network element, that the terminal device is in the non-roaming state or the LBO roaming state.

In an optional implementation, the NEF network element is further configured to obtain, through query from a UDM network element, a roaming type supported by the terminal device.

In an optional implementation, the roaming type supported by the terminal device is a roaming type supported by a DN that the terminal device is allowed to access; and when obtaining, through query from the UDM network element, the roaming type supported by the terminal device, the NEF network element is specifically configured to obtain, through query from the UDM network element based on a name of the DN, the roaming type supported by the DN.

In addition, in this aspect, for beneficial effects of the foregoing optional implementations, refer to beneficial effects of related implementations in the third aspect. Details are not described again.

According to a tenth aspect, an embodiment of this application provides a communication system. The system includes an NEF network element, a third NEF network element, a second PCF network element, a second SMF network element, and an SMF network element. The NEF network element is configured to receive first information from an AF network element, where the first information indicates a service requirement related to a session of a terminal device. The NEF network element is further configured to send the first information to the third NEF network element. The third NEF network element is configured to receive the first information from the NEF network element, and send the first information to the second PCF network element. The second PCF network element is configured to receive the first information from the third NEF network element, and send the first information to the second SMF network element. The second SMF network element is configured to receive the first information from the second PCF network element, and send the first information to the SMF network element. The SMF network element is configured to receive the first information from the second SMF network element. The terminal device is in an HR roaming state, or the terminal device supports an HR roaming type.

It can be learned that, in the communication system, when the terminal device is in the HR roaming state, or the terminal device supports the HR roaming type, the first information from the AF network element can be transmitted from the NEF network element to the SMF network element, so that the SMF network element can serve the session of the terminal device based on the first information, thereby improving quality of service of a service.

In an optional implementation, the NEF network element and the SMF network element belong to a first PLMN, the third NEF network element, the second PCF network element, and the second SMF network element belong to a second PLMN, and the first PLMN is different from the second PLMN.

In an optional implementation, the NEF network element is further configured to: when an address of the terminal device does not belong to an address segment corresponding to the first PLMN, determine that the terminal device is in the HR roaming state.

In an optional implementation, the NEF network element is further configured to: when obtaining no address of a BSF network element through query from an NRF network element based on the address of the terminal device, determine that the terminal device is in the HR roaming state.

In an optional implementation, the NEF network element is further configured to: when obtaining no address of a PCF network element through query from a BSF network element based on the address of the terminal device, determine that the terminal device is in the HR roaming state.

In an optional implementation, the NEF network element is further configured to obtain, through query from a UDM network element, a roaming type supported by the terminal device.

In an optional implementation, the roaming type supported by the terminal device is a roaming type supported by a DN that the terminal device is allowed to access; and when obtaining, through query from the UDM network element, the roaming type supported by the terminal device, the NEF network element is specifically configured to obtain, through query from the UDM network element based on a name of the DN, the roaming type supported by the DN.

In addition, in this aspect, for beneficial effects of the foregoing optional implementations, refer to beneficial effects of related implementations in the third aspect. Details are not described again.

According to an eleventh aspect, an embodiment of this application provides a communication system. The system includes an NEF network element, a PCF network element, a third NEF network element, a second PCF network element, a second SMF network element, and an SMF network element. The NEF network element is configured to receive first information from an AF network element, where the first information indicates a service requirement related to a session of a terminal device. The NEF network element is further configured to send the first information to the PCF network element, and send the first information to the third NEF network element. The PCF network element is configured to receive the first information from the NEF network element, and send the first information to the SMF network element. The third NEF network element is configured to receive the first information from the NEF network element, and send the first information to the second PCF network element. The second PCF network element is configured to receive the first information from the third NEF network element, and send the first information to the second SMF network element. The second SMF network element is configured to receive the first information from the second PCF network element, and send the first information to the SMF network element. The SMF network element is configured to receive the first information from the NEF network element, and receive the first information from the second SMF network element. The terminal device supports an LBO roaming type and an HR roaming type.

In an optional implementation, the NEF network element and the SMF network element belong to a first PLMN, the third NEF network element, the second PCF network element, and the second SMF network element belong to a second PLMN, and the first PLMN is different from the second PLMN.

In an optional implementation, the NEF network element is further configured to obtain, through query from a UDM network element, a roaming type supported by the terminal device.

In an optional implementation, the roaming type supported by the terminal device is a roaming type supported by a DN that the terminal device is allowed to access; and when obtaining, through query from the UDM network element, the roaming type supported by the terminal device, the NEF network element is specifically configured to obtain, through query from the UDM network element based on a name of the DN, the roaming type supported by the DN.

In addition, in this aspect, for beneficial effects of the foregoing optional implementations, refer to beneficial effects of related implementations in the third aspect. Details are not described again.

According to a twelfth aspect, this application further provides a communication apparatus. The communication apparatus has a function of implementing some or all of the implementations of the first aspect, or has a function of implementing some or all of the functional implementations of the second aspect, or has a function of implementing some or all of the functional implementations of the third aspect. The function may be implemented by using hardware, or may be implemented by using hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The processing unit may be configured to control the communication unit to perform data/signaling receiving and sending. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication unit is configured to send an address of a terminal device and an address of the communication apparatus to a central network element, and the central network element is configured to provide the address of the communication apparatus for an NEF network element based on the address of the terminal device. The communication unit is further configured to receive first information forwarded by the NEF network element from an AF network element, where the first information indicates a service requirement related to a session of the terminal device.

In addition, for another optional implementation of the communication apparatus in this aspect, refer to the related content of the first aspect. Details are not described herein again.

In another implementation, the communication unit is configured to receive first information from an AF network element, where the first information indicates a service requirement related to a session of a terminal device; the processing unit is configured to query an address of an SMF network element from a central network element based on an address of the terminal device; and the communication unit is further configured to send the first information to the SMF network element.

In addition, for another optional implementation of the communication apparatus in this aspect, refer to the related content of the second aspect. Details are not described herein again.

In another implementation, the communication unit is configured to receive first information from an AF network element, where the first information indicates a service requirement related to a session of a terminal device; and the communication unit is further configured to send the first information to an SMF network element.

When sending the first information to the SMF network element, the communication unit is specifically configured to send the first information to the SMF network element via a PCF network element, where the terminal device is in a non-roaming state, or the terminal device is in an LBO roaming state, or the terminal device supports an LBO roaming type.

Alternatively, when sending the first information to the SMF network element, the communication unit is specifically configured to send the first information to the SMF network element via a third NEF network element, a second PCF network element, and a second SMF network element, where the terminal device is in an HR roaming state, or the terminal device supports an HR roaming type.

Alternatively, when sending the first information to the SMF network element, the communication unit is specifically configured to send the first information to the SMF network element via a PCF network element, and send the first information to the SMF network element via a third NEF network element, a second PCF network element, and a second SMF network element, where the terminal device supports an LBO roaming type and an HR roaming type.

In addition, for another optional implementation of the communication apparatus in this aspect, refer to the related content of the third aspect. Details are not described herein again.

For example, the communication unit may be a transceiver or a communication interface, the storage unit may be a memory, and the processing unit may be a processor. The processor may be configured to perform the method according to the first aspect, the second aspect, the third aspect, or the fourth aspect by using a logic circuit or by running a computer program. The transceiver may be configured to receive and send signals. The memory may be configured to store a computer program.

In an implementation, the transceiver is configured to send an address of a terminal device and an address of the communication apparatus to a central network element, and the central network element is configured to provide the address of the communication apparatus for an NEF network element based on the address of the terminal device. The transceiver is further configured to receive first information forwarded by the NEF network element from an AF network element, where the first information indicates a service requirement related to a session of the terminal device.

In addition, for another optional implementation of the communication apparatus in this aspect, refer to the related content of the first aspect. Details are not described herein again.

In another implementation, the transceiver is configured to receive first information from an AF network element, where the first information indicates a service requirement related to a session of a terminal device; the processor is configured to query an address of an SMF network element from a central network element based on an address of the terminal device; and the transceiver is further configured to send the first information to the SMF network element.

In addition, for another optional implementation of the communication apparatus in this aspect, refer to the related content of the second aspect. Details are not described herein again.

In another implementation, the transceiver is configured to receive first information from an AF network element, where the first information indicates a service requirement related to a session of a terminal device; and the transceiver is further configured to send the first information to an SMF network element.

When sending the first information to the SMF network element, the transceiver is specifically configured to send the first information to the SMF network element via a PCF network element, where the terminal device is in a non-roaming state, or the terminal device is in an LBO roaming state, or the terminal device supports an LBO roaming type.

Alternatively, when sending the first information to the SMF network element, the transceiver is specifically configured to send the first information to the SMF network element via a third NEF network element, a second PCF network element, and a second SMF network element, where the terminal device is in an HR roaming state, or the terminal device supports an HR roaming type.

Alternatively, when sending the first information to the SMF network element, the transceiver is specifically configured to send the first information to the SMF network element via a PCF network element, and send the first information to the SMF network element via a third NEF network element, a second PCF network element, and a second SMF network element, where the terminal device supports an LBO roaming type and an HR roaming type.

In addition, for another optional implementation of the communication apparatus in this aspect, refer to the related content of the third aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, increasingly more components may be integrated on a same chip. For example, the digital baseband processor may be integrated on a same chip as a plurality of application processors (for example, but not limited to a graphics processing unit and a multimedia processor). The chip may be referred to as a system on a chip (system on a chip, SoC). Whether components are independently disposed on different chips or are integrated and disposed on one or more chips usually depends on requirements of a product design. Embodiments of this application impose no limitation on implementation forms of the foregoing components.

According to a thirteenth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver transmits the signal. After the foregoing signal is output by the processor, other processing may further need to be performed before the signal arrives at the transceiver. Similarly, when the processor receives the input signal, the transceiver receives the signal, and inputs the signal into the processor. Further, after the transceiver receives the foregoing signal, other processing may further need to be performed on the signal, and then the signal is input to the processor.

Operations such as sending and receiving related to the processor may be more generally understood as operations such as input, receiving, and output of the processor, instead of operations such as sending and receiving directly performed by a radio frequency circuit and an antenna, unless otherwise specified, or provided that the operations do not contradict actual functions or internal logic of the operations in related descriptions.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a fourteenth aspect, this application provides a computer-readable storage medium, configured to store instructions. When the instructions are run by a computer, the method according to any one of the first aspect, the second aspect, or the third aspect is performed.

According to a fifteenth aspect, this application further provides a computer program product including instructions. When the computer program product runs on a computer, the method according to any one of the first aspect, the second aspect, or the third aspect is performed.

According to a sixteenth aspect, this application provides a chip system. The chip system includes a processor and an interface. The interface is configured to obtain a program or instructions. The processor is configured to invoke the program or the instructions to implement the function in the first aspect, or is configured to invoke the program or the instructions to implement the function in the second aspect, or is configured to invoke the program or the instructions to implement the function in the third aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of another network architecture according to an embodiment of this application;
FIG. 4 is a diagram of another network architecture according to an embodiment of this application;
FIG. 5 is a schematic flowchart of a communication method 100 according to an embodiment of this application;
FIG. 6 is a schematic flowchart of a communication method 200 according to an embodiment of this application;
FIG. 7a is a diagram of transmitting first information according to an embodiment of this application;
FIG. 7b is another diagram of transmitting first information according to an embodiment of this application;
FIG. 7c is another diagram of transmitting first information according to an embodiment of this application;
FIG. 8 is a schematic flowchart of a communication method 300 according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of a chip according to an embodiment of this application.

### DESCRIPTION OF EMBODIMENTS

The following clearly and completely describes the technical solutions in embodiments of this application with reference to the accompanying drawings in embodiments of this application.

To better understand a communication method disclosed in embodiments of this application, a communication system to which embodiments of this application are applicable is described.

Embodiments of this application may be applied to a long term evolution (long term evolution, LTE) system and a 5th generation (5th generation, 5G) communication system like a new radio (new radio, NR) system. In addition, with continuous development of communication technologies, the technical solutions in embodiments of this application may be further applied to subsequently evolved communication systems, for example, a 6th generation (6th Generation, 6G) mobile communication technology system and a 7th generation (7th Generation, 7G) mobile communication technology system.

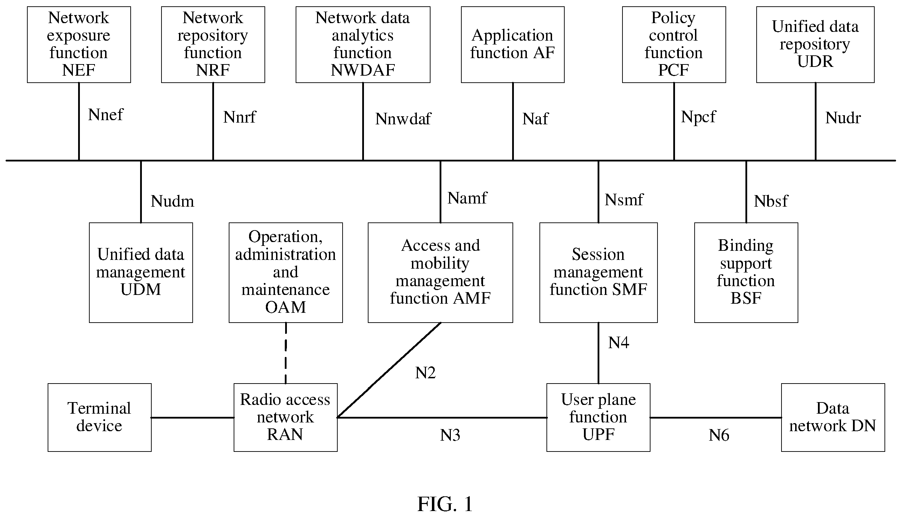

Refer to FIG. 1. FIG. 1 is a diagram of a network architecture according to an embodiment of this application. The network architecture is a network architecture in a non-roaming scenario, and the network architecture is a 5G network architecture based on a service-based interface. The network architecture includes a network data analytics function (network data analytics function, NWDAF) network element, an application function (application function, AF) network element, a radio access network (radio access network, RAN) device, a terminal device, an operation, administration and management (operation, administration and management, OAM) device, an access and mobility management function (access and mobility management function, AMF) network element, a user plane function (user plane function, UPF) network element, a data network (data network, DN), a unified data management (unified data management, UDM) network element, a binding support function (binding support function, BSF) network element, a network exposure function (network exposure function, NEF) network element, a network repository function (network repository function, NRF) network element, a policy control function (policy control function, PCF) network element, and a unified data repository (unified data repository, UDR) network element.

As shown in FIG. 1, the RAN device may communicate with the AMF network element through an N2 interface, the UPF network element may communicate with the SMF network element through an N4 interface, and the UPF network element may access the DN through an N6 interface. In addition, the NEF network element, the NRF network element, the NWDAF network element, the AF network element, the PCF network element, the UDR network element, the UDM network element, the AMF network element, the SMF network element, and the BSF network element may implement communication through service-based interfaces provided externally. For example, a service-based interface externally provided by the NEF network element is an Nnef interface, a service-based interface externally provided by the UDM network element is an Nudm interface, a service-based interface externally provided by the NWDAF network element is an Nnwdaf interface, a service-based interface externally provided by the AMF network element is an Namf interface, a service-based interface externally provided by the AF network element is an Naf interface, a service-based interface externally provided by the SMF network element is an Nsmf interface, a service-based interface externally provided by the PCF network element is an Npcf interface, a service-based interface externally provided by the BSF network element is an Nbsf interface, and a service-based interface externally provided by the UDR network element is an Nudr interface.

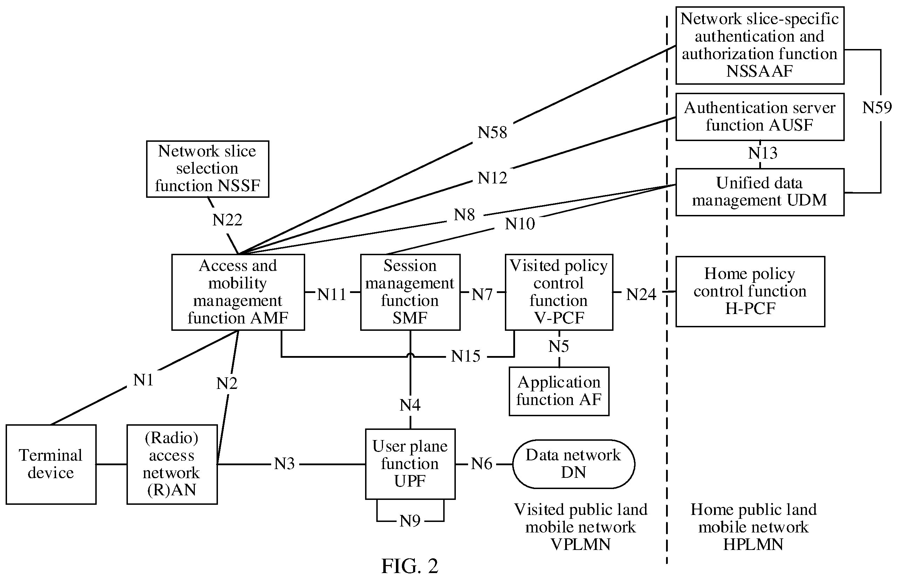

Refer to FIG. 2. FIG. 2 is a diagram of another network structure according to an embodiment of this application. The network architecture is a network architecture in a local breakout (local breakout, LBO) roaming scenario. Networks in the LBO roaming scenario include a visited public land mobile network (visited public land mobile network, VPLMN) and a home public land mobile network (home public land mobile network, HPLMN). The HPLMN is a public land mobile network (public land mobile network, PLMN) that a terminal device subscribes to in a home location, and the VPLMN is a PLMN that a terminal device accesses in a roaming location. The network architecture shown in FIG. 2 includes a terminal device, a network slice selection function (network slice selection function, NSSF) network element, an AMF network element, a session management function (session management function, SMF) network element, a PCF network element, an AF network element, a RAN device, a UPF network element, and a DN in the VPLMN, and a network slice-specific authentication and authorization function (network slice-specific authentication and authorization function, NSSAAF) network element, an authentication server function (authentication server function, AUSF) network element, a UDM network element, and a PCF network element in the HPLMN. In addition, "Nxx" between two network elements shown in FIG. 2 represents an interface used for communication between the two network elements. For example, in FIG. 2, the NSSF network element in the VPLMN may communicate with the AMF network element through an N22 interface, and the AMF network element may communicate with the SMF network element through an N11 interface.

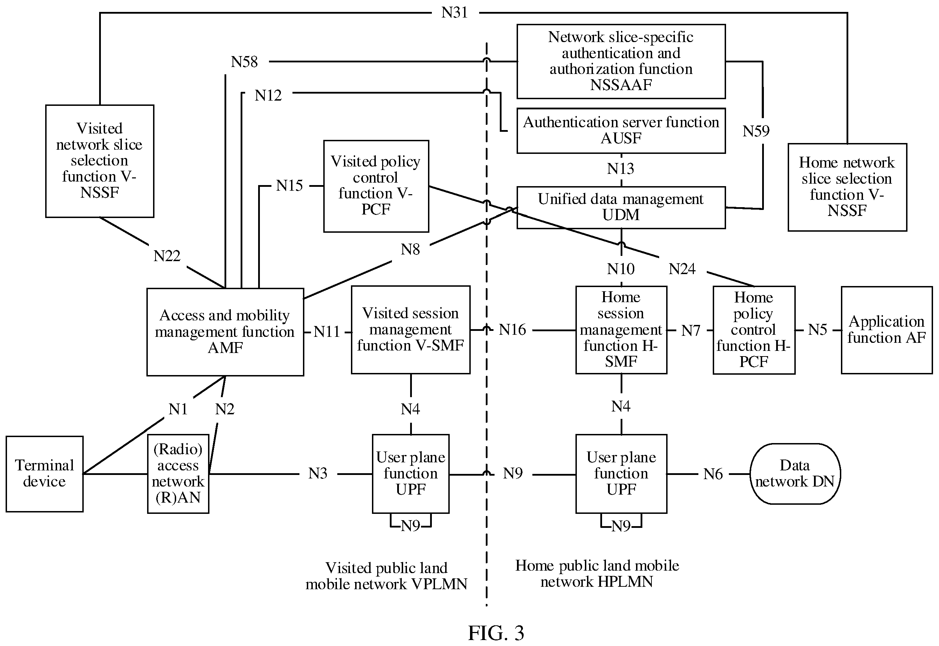

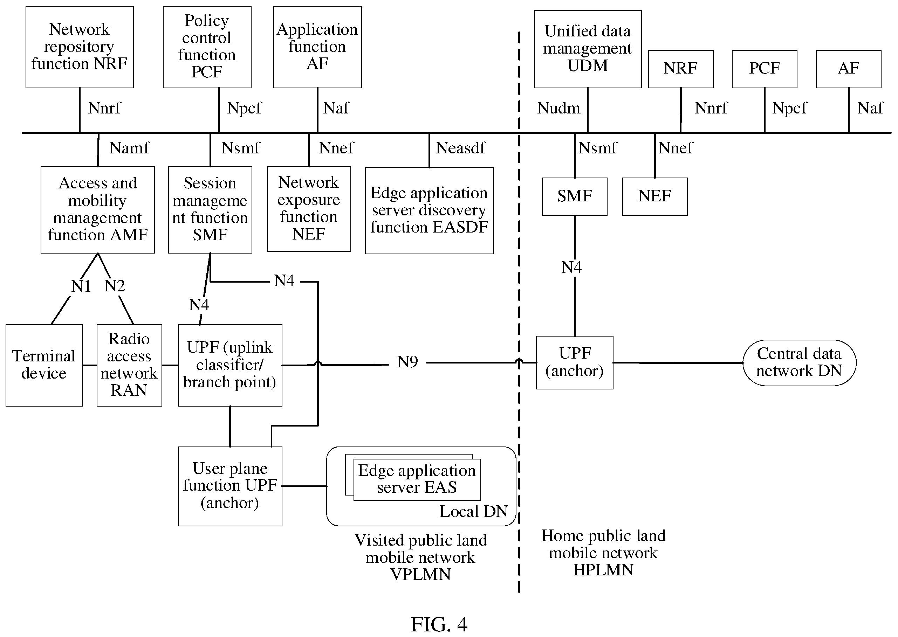

Refer to FIG. 3. FIG. 3 is a diagram of another network architecture according to an embodiment of this application. The network architecture is a network architecture in a home routed (home routed, HR) roaming scenario. Networks in the HR roaming scenario include a VPLMN and an HPLMN. The network architecture shown in FIG. 3 includes a terminal device, a RAN device, a UPF network element, an AMF network element, an SMF network element, an NSSF network element, and a PCF network element in the VPLMN, and an NSSAAF network element, an AUSF network element, a UDM network element, an NSSF network element, an SMF network element, a PCF network element, an AF network element, a UPF network element, and a DN in the HPLMN. "Nxx" between two network elements shown in FIG. 3 represents an interface used for communication between the two network elements. Further, in addition to the network architecture shown in FIG. 3, the network architecture in the HR roaming scenario may alternatively be a 5G network architecture based on a service-based interface shown in FIG. 4. In the network architecture shown in FIG. 4, an NRF network element, a PCF network element, an AF network element, an AMF network element, an SMF network element, an NEF network element, an EASDF network element, and a UDM network element may implement communication through service-based interfaces provided externally.

In addition, in embodiments of this application, an "xx network element" in a VPLMN may also be referred to as a "visited xx network element". For example, a PCF network element in the VPLMN may also be referred to as a visited PCF network element (namely, a V-PCF network element), and an SMF network element in the VPLMN may also be referred to as a visited SMF network element (namely, a V-SMF network element). An "xx network element" in an HPLMN may also be referred to as a "home xx network element". For example, a PCF network element in the HPLMN may also be referred to as a home PCF network element (namely, an H-PCF network element), and an SMF network element in the HPLMN may also be referred to as a home SMF network element (namely, an H-SMF network element).

In embodiments of this application, the terminal device is a device having wireless sending and receiving functions. The terminal device may also be referred to as user equipment (user equipment, UE), a terminal, an access terminal device, a vehicle-mounted terminal, an industrial control terminal, a subscriber unit, a subscriber station, a mobile station (mobile station, MS), a remote station, a remote terminal device, a mobile terminal (mobile terminal, MT), a mobile device, a wireless communication device, a user terminal, a user agent, a user apparatus, or the like. The terminal device may be deployed on land, and include an indoor or outdoor terminal device, a handheld terminal device, a wearable terminal device, or a vehicle-mounted terminal device; or may be deployed on a water surface (for example, on a ship); or may be deployed in the air (for example, on an aircraft or a balloon). The terminal device may be a mobile phone (mobile phone), a tablet computer (Pad), a computer with wireless sending and receiving functions, a virtual reality (VR) terminal device, an augmented reality (AR) terminal device, a wireless terminal in industrial control (industrial control), a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. This is not limited in this application.

The RAN device is mainly responsible for access of a terminal device to a 3rd generation partnership project (3rd Generation Partnership Project, 3GPP) network through wireless communication. The RAN device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB, or a home NodeB, HNB), a baseband unit (baseband unit, BBU), or an access point (access point, AP), a wireless relay node, a wireless backhaul node, or a transmission point (transmission and reception point, TRP, or transmission point, TP) in a wireless fidelity (wireless fidelity, Wi-Fi) system; or may be a device used in a 4G, 5G, or even 6G system, for example, an evolved NodeB (NodeB or eNB or e-NodeB, evolved NodeB) in LTE, a next-generation LTE base station (next-generation eNodeB, ng-eNB), a next-generation base station (next-generation NodeB, gNodeB or gNB), a transceiver point, or a transmission point (TRP or TP); or may be a network node that forms a gNB or a transmission point, for example, a baseband unit (BBU), a distributed unit (distributed unit, DU), a pico network device (Picocell), a femto network device (Femtocell), or a roadside unit (roadside unit, RSU) in an intelligent driving scenario. The base station may be a macro base station, a micro base station, a pico base station, a small cell, a relay station, a balloon station, or the like.

The AMF network element is mainly responsible for access and mobility management of a terminal device in a mobile network, such as registration, handover, and deregistration.

The SMF network element is mainly responsible for session management in a mobile network, for example, session establishment, modification, and release. Specific functions of the SMF network element include allocating an internet protocol (internet protocol, IP) address to a terminal device, selecting a UPF network element that provides a packet forwarding function, and the like. The V-SMF network element is a visited domain SMF network element that serves a terminal device when the terminal device roams, and the H-SMF network element is a home domain SMF network element that serves a terminal device when the terminal device roams.

The UPF network element is mainly responsible for user packet processing, for example, forwarding and charging. In a protocol data unit (protocol data unit, PDU) session, a UPF network element that is directly connected to a DN through an N6 interface may also be referred to as a PDU session anchor (PDU session anchor, PSA).

The PCF network element may be configured to support unified policy management on network behavior and provide a policy rule for a control plane function, and may be further configured to obtain subscription-related information from a UDR network element to make a policy decision. The V-PCF network element is a visited domain PCF network element that serves a terminal device when the terminal device roams, and the H-PCF network element is a home domain PCF network element that serves a terminal device when the terminal device roams. A V-PCF network element that can serve a terminal device in an LBO roaming state exists in a network architecture in an LBO roaming scenario, and no V-PCF network element that can serve a terminal device in an HR roaming state exists in a network architecture in an HR roaming scenario.

The UDR network element may be configured to provide a capability of storing subscription data, policy data, and capability exposure-related data.

The UDM network element may be configured to perform subscription management, access authorization, authentication information generation, and the like on a terminal device.

The AF network element interacts with a 5G core network to provide a service, for example, to support the following functions: impact on service routing and network access capability exposure; and interacts with a policy decision network element to perform policy management and control.

The NEF network element may be configured to provide capability exposure of a 5G core network, and allow an external network element to interact with the 5G core network through the network element.

The BSF network element may be configured to store PCF network element registration information, for PCF network element discovery and selection.

The NRF network element may be configured to store information about each network element in a PLMN to which the NRF belongs, for network element discovery.

For ease of understanding embodiments disclosed in this application, the following two points are described.
(1) In embodiments disclosed in this application, an NR network scenario in a wireless communication network is used as an example to describe a scenario. It should be noted that the solutions in embodiments disclosed in this application may further be applied to another wireless communication network, and a corresponding name may also be replaced with a name of a corresponding function in the another wireless communication network.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Then, related concepts in embodiments of this application are briefly described.

### 1. Edge computing (edge computing, EC)

EC is a distributed computing mode in which distributed service traffic is locally processed by relocating a user plane function and a service processing capability to a network edge.

In a network architecture in which a user plane device is deployed in a tree topology, an uplink user packet needs to pass through a base station, a backhaul network, and centrally deployed anchor gateways to access a data network. These anchor gateways are usually centrally deployed at a high-level location (for example, a regional central equipment room) in a network. As a result, when service traffic is heavy, the traffic is excessively concentrated at the anchor gateways. Compared with the foregoing network architecture in which a user plane device is deployed in a tree topology, a manner in which a network architecture is deployed based on EC can reduce excessive concentration of traffic at an anchor gateway, thereby reducing requirements on backhaul network bandwidth, an equipment room throughput, and a gateway specification.

In addition, the user plane function and the service processing capability are relocated to the network edge in EC, so that a device having the user plane function and the service processing capability can be closer to a terminal device, thereby shortening a distance of a backhaul network, and reducing an end-to-end (end-to-end, E2E) delay and jitter of a user packet. The network architectures shown in FIG. 1 to FIG. 4 are all network architectures deployed based on EC. In all the network architectures shown in FIG. 1 to FIG. 4, a UPF network element is deployed at a network edge. For example, in the network architecture shown in FIG. 1, a UPF network element is deployed at a network edge, and a user plane path is that a terminal device accesses a DN through a RAN device and a UPF network element. In this way, an E2E delay and jitter of a user packet can be reduced.

### 2. HPLMN and VPLMN

The HPLMN is a PLMN to which a terminal device subscribes. When the terminal device leaves a coverage area of the HPLMN, the terminal device may access the VPLMN. A coverage area of the VPLMN can include a current location of the terminal device, and an operator to which the VPLMN belongs and an operator to which the HPLMN belongs sign a roaming agreement, so that the operator to which the VPLMN belongs can provide a service, charging, and the like for the terminal device.

### 3. State of a terminal device and roaming type

States of the terminal device include a non-roaming state, an LBO roaming state, and an HR roaming state.

When the terminal device is in the non-roaming state, the terminal device is located in a coverage area of an HPLMN, and the terminal device accesses the HPLMN. For the terminal device in the non-roaming state, with reference to FIG. 1, a user plane path may be that the terminal device accesses a DN through a RAN device and a UPF network element, where both the RAN device and the UPF network element belong to the HPLMN.

When the terminal device is in the LBO roaming state, the terminal device is located in a coverage area of a VPLMN, and the terminal device accesses the VPLMN. For the terminal device in the LBO roaming state, with reference to FIG. 2, a user plane path may be that the terminal device accesses a DN through a RAN device and a UPF network element, where both the RAN device and the UPF network element belong to the VPLMN.

When the terminal device is in the HR roaming state, the terminal device is located in a coverage area of a VPLMN, and the terminal device accesses the VPLMN. For the terminal device in the HR roaming state, with reference to FIG. 3 or FIG. 4, a user plane path may be that the terminal device accesses a DN through a RAN device in the VPLMN, a UPF network element in the VPLMN, and a UPF network element (serving as an anchor) in an HPLMN. Alternatively, with reference to FIG. 4, a user plane path may be as follows: A part of traffic of the terminal device enters a local DN through a RAN device in the VPLMN, a UPF network element serving as an uplink classifier (uplink classifier, UL CL) or a branch point (branch point, BP) in the VPLMN, and a UPF network element serving as a local anchor in the VPLMN, and the other part of traffic of the terminal device enters a DN through the RAN device in the VPLMN, the UPF network element serving as the UL CL or the BP in the VPLMN, and a UPF network element serving as an anchor in an HPLMN. In this case, the HR roaming state may also be referred to as an HR PDU session with session breakout (HR PDU session with session breakout, HR-SBO) roaming state.

Roaming types include an LBO roaming type and an HR roaming type. For a terminal device, the terminal device supports the LBO roaming type but does not support the HR roaming type, or the terminal device supports the HR roaming type but does not support the LBO roaming type, or the terminal device supports the LBO roaming type and the HR roaming type. That the terminal device supports the LBO roaming type means that subscription information of the terminal device allows the terminal device to establish a session in an LBO roaming scenario, and that the terminal device supports the HR roaming type means that subscription information of the terminal device allows the terminal device to establish a session in an HR roaming scenario.

For a terminal device in the non-roaming state, the terminal device supports the LBO roaming type but does not support the HR roaming type, or the terminal device supports the HR roaming type but does not support the LBO roaming type, or the terminal device supports the LBO roaming type and the HR roaming type. For a terminal device in the LBO roaming state, the terminal device supports the LBO roaming type but does not support the HR roaming type, or the terminal device supports the LBO roaming type and the HR roaming type. For a terminal device in the HR roaming state, the terminal device supports the HR roaming type but does not support the LBO roaming type, or the terminal device supports the HR roaming type and the LBO roaming type.

The following describes the communication method according to embodiments of this application with reference to the accompanying drawings.

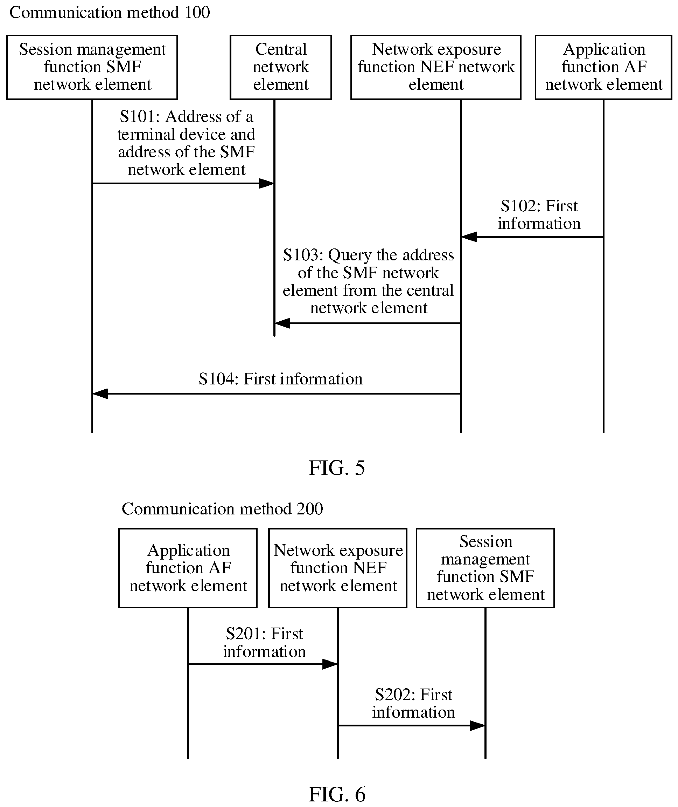

Refer to FIG. 5. FIG. 5 is a schematic flowchart of a communication method 100 according to an embodiment of this application. The communication method 100 is described from a perspective of interaction between an SMF network element, a central network element, an NEF network element, and an AF network element. This embodiment may be performed by the SMF network element, the central network element, the NEF network element, and the AF network element, or may be performed by components (for example, components such as processors, chips, or chip systems) included in the SMF network element, the central network element, the NEF network element, and the AF network element. The following uses an example in which the SMF network element, the central network element, the NEF network element, and the AF network element are used as execution bodies for description. The communication method 100 includes the following steps.

S101: The SMF network element sends an address of a terminal device and an address of the SMF network element to the central network element. Correspondingly, the central network element receives the address of the terminal device and the address of the SMF network element from the SMF network element.

In an optional implementation, that the SMF network element sends the address of the terminal device and the address of the SMF network element to the central network element includes: The SMF network element sends the address of the terminal device and the address of the SMF network element to the central network element based on an HR roaming state of the terminal device. In other words, when a condition that the terminal device is in the HR roaming state is satisfied, the SMF network element performs the operation of sending the address of the terminal device and the address of the SMF network element to the central network element. This implementation helps the NEF network element obtain the address of the SMF network element from the central network element when the terminal device is in the HR roaming state, so that the NEF network element can determine the SMF network element based on the address of the SMF network element.

Optionally, the method further includes: The SMF network element determines that the terminal device is in the HR roaming state. A specific manner in which the SMF network element determines that the terminal device is in the HR roaming state may be described in the following optional implementation 1.1 and implementation 1.2.

Implementation 1.1: That the SMF network element determines that the terminal device is in the HR roaming state includes: When receiving an address of a second SMF network element from an AMF network element, the SMF network element determines that the terminal device is in the HR roaming state. The second SMF network element is configured to serve a session of the terminal device, and the second SMF network element and the SMF network element belong to different PLMNs.

In a session establishment process of the terminal device in the HR roaming state, after receiving, from the terminal device, a non-access stratum (non-access stratum, NAS) message used to request to establish a session, the AMF network element may determine the SMF network element and the second SMF network element that are configured to serve the session of the terminal device, and send, to the SMF network element, a message indicating the SMF network element to serve the session of the terminal device, where the message carries the address of the second SMF network element. Therefore, when receiving the address of the second SMF network element from the AMF network element, the SMF network element may determine that the terminal device is in the HR roaming state.

Implementation 1.2: That the SMF network element determines that the terminal device is in the HR roaming state includes: When receiving the address of the terminal device from a second SMF network element, the SMF network element determines that the terminal device is in the HR roaming state. The second SMF network element is configured to serve a session of the terminal device, and the second SMF network element and the SMF network element belong to different PLMNs.

In a session establishment process of the terminal device in the HR roaming state, after determining the second SMF network element, the AMF network element may send, to the second SMF network element, a message indicating the second SMF network element to serve a session of the terminal device. After receiving the message, the second SMF network element may obtain the address of the terminal device from a UPF network element that belongs to a same PLMN as the second SMF network element, and send the address of the terminal device to the SMF network element. Therefore, when receiving the address of the terminal device from the second SMF network element, the SMF network element may determine that the terminal device is in the HR roaming state.

In another optional implementation, before the SMF network element sends the address of the terminal device and the address of the SMF network element to the central network element, the method further includes: The SMF network element receives an address of a second SMF network element from an AMF network element, where the second SMF network element is configured to serve a session of the terminal device, and the second SMF network element and the SMF network element belong to different PLMNs. In other words, that the SMF network element receives the address of the second SMF network element from the AMF network element is used as a trigger condition for the SMF network element to perform the operation of sending the address of the terminal device and the address of the SMF network element to the central network element. That the SMF network element receives the address of the second SMF network element from the AMF network element may indicate that the terminal device is in the HR roaming state. This implementation helps enable the NEF network element to obtain the address of the SMF network element through query when the terminal device is in the HR roaming state, so as to send first information to the SMF network element, thereby helping improve quality of service of a service in a network including an HR roaming scenario.

Optionally, the method may further include: The SMF network element obtains the address of the terminal device from the second SMF network element. In other words, after receiving the address of the second SMF network element, the SMF network element may determine the second SMF network element based on the address of the second SMF network element, so as to obtain, from the second SMF network element, the address of the terminal device to be sent to the central network element.

In another optional implementation, before the SMF network element sends the address of the terminal device and the address of the SMF network element to the central network element, the method further includes: The SMF network element receives the address of the terminal device from a second SMF network element, where the second SMF network element is configured to serve a session of the terminal device, and the second SMF network element and the SMF network element belong to different PLMNs. In other words, that the SMF network element receives the address of the terminal device from the second SMF network element is used as a trigger condition for the SMF network element to perform the operation of sending the address of the terminal device and the address of the SMF network element to the central network element. That the SMF network element receives the address of the terminal device from the second SMF network element may indicate that the terminal device is in the HR roaming state. This implementation helps enable the NEF network element to obtain the address of the SMF network element through query when the terminal device is in the HR roaming state, so as to send first information to the SMF network element, thereby helping improve quality of service of a service in a network including an HR roaming scenario.

In an optional implementation, that the SMF network element sends the address of the terminal device and the address of the SMF network element to the central network element includes: The SMF network element sends the address of the terminal device and the address of the SMF network element to the central network element through a communication interface between the SMF network element and the central network element. In other words, the SMF network element directly sends the address of the terminal device and the address of the SMF network element to the central network element, instead of sending the address of the terminal device and the address of the SMF network element to the central network element through another network element. This implementation can reduce signaling overheads.

Optionally, the central network element may be an NEF network element that belongs to a same PLMN as the SMF network element. This manner helps enable the NEF network element to query the address of the SMF network element in the NEF network element when the NEF network element queries the address of the SMF network element in step S103, instead of querying the address of the SMF network element from another network element, thereby reducing signaling overheads. Alternatively, the central network element may be a UDR network element that belongs to a same PLMN as the SMF network element, and the UDR network element has a function of storing various types of information. Alternatively, the central network element may be a BSF network element that belongs to a same PLMN as the SMF network element. Because the NEF network element has a function of querying information from the BSF network element after receiving an AF request from the AF network element, when the BSF network element serves as the central network element, the NEF network element may use this function to query the address of the SMF network element from the BSF network element, so that a query logic change of the NEF network element is small. Alternatively, the central network element may be a second NEF network element, a PCF network element, or the like that belongs to a same PLMN as the SMF network element. This is not limited.

In another optional implementation, that the SMF network element sends the address of the terminal device and the address of the SMF network element to the central network element includes: The SMF network element sends the address of the terminal device and the address of the SMF network element to an intermediate network element; and the intermediate network element receives the address of the terminal device and the address of the SMF network element from the SMF network element, and sends the address of the terminal device and the address of the SMF network element to the central network element. The intermediate network element and the central network element are different network elements. Optionally, the intermediate network element, the central network element, and the SMF network element belong to a same PLMN. For example, the central network element may be a UDR network element that belongs to the same PLMN as the SMF network element, and the intermediate network element may be an NEF network element, a second NEF network element, or a PCF network element that belongs to the same PLMN as the SMF network element. In this case, there is an established communication interface between the SMF network element and the intermediate network element. The SMF network element may reuse the communication interface to send the address of the terminal device and the address of the SMF network element to the intermediate network element, instead of additionally establishing a new communication interface between the SMF network element and the intermediate network element.

In an optional implementation, the method further includes: The central network element stores the address of the terminal device and the address of the SMF network element, so that the central network element can provide the address of the SMF network element for the NEF network element. Optionally, the method further includes: The central network element stores a correspondence between the address of the terminal device and the address of the SMF network element. This manner helps the central network element provide, for the NEF network element based on the address of the terminal device, the address of the SMF network element corresponding to the address of the terminal device, so that the NEF network element can determine the SMF network element based on the address of the SMF network element.

S102: The AF network element sends first information to the NEF network element, where the first information indicates a service requirement related to the session of the terminal device. Correspondingly, the NEF network element receives the first information from the AF network element. The first information sent by the AF network element to the NEF network element may be carried in a request (AF request) sent by the AF network element to the NEF network element.

This embodiment of this application may be applied to scenarios related to the session of the terminal device, such as edge application server (edge application server, EAS) rediscovery (rediscovery), edge relocation (edge relocation), policy update, and user plane path change. The following uses the scenarios of EAS rediscovery, edge relocation, policy update, and user plane path change as examples to separately describe the first information in these scenarios.

When this embodiment of this application is applied to the EAS rediscovery scenario, the first information specifically indicates a service (application) for which an EAS needs to be rediscovered in the session of the terminal device. In this case, the first information may include an indication for EAS relocation (indication for eas relocation) and an identifier of the service.

When this embodiment of this application is applied to the edge relocation scenario, the first information specifically indicates an edge relocation service requirement for the session of the terminal device. When edge relocation is specifically EAS IP address replacement, the first information specifically indicates an AS IP address replacement requirement for the session of the terminal device. The first information may include an indication for EAS relocation and information for EAS IP address replacement in a 5G core network (information for eas ip replacement in 5GC). The information for EAS IP address replacement in the 5G core network indicates that the session of the terminal device is required to change from communication with a source EAS to communication with a destination EAS. The information for EAS IP address replacement in the 5G core network may include a source EAS IP address and a destination EAS IP address.

When this embodiment of this application is applied to the policy update scenario, the first information specifically indicates a policy update requirement for the session of the terminal device. For example, when a policy update is specifically a quality of service (quality of service, QoS) policy update, the first information specifically indicates a QoS policy update requirement for the session of the terminal device, and the first information may include a QoS index or a QoS parameter. For another example, when a policy update is specifically a charging policy update, the first information specifically indicates a charging policy update requirement for the session of the terminal device.

When this embodiment of this application is applied to the user plane path change scenario, the first information specifically indicates a user plane path change requirement for the session of the terminal device. The user plane path change requirement may be a requirement for adding a UPF network element to a user plane path. For example, the user plane path change requirement may be a requirement for adding a UPF network element serving as a branch point (UL CL/BP) to a user plane path, so that a part of traffic enters a local data network. Alternatively, the user plane path change requirement may be a requirement for deleting a UPF network element from a user plane path, or may be a requirement for replacing a UPF network element on a user plane path, or the like.

In an optional implementation, the method further includes: The AF network element sends the address of the terminal device to the NEF network element. Correspondingly, the NEF network element receives the address of the terminal device from the AF network element. This implementation helps enable the NEF network element to learn of the address of the terminal device, so as to query the address of the SMF network element from the central network element based on the address of the terminal device. In addition, the address of the terminal device sent by the AF network element to the NEF network element may be carried in an AF request.

S103: The NEF network element queries the address of the SMF network element from the central network element based on the address of the terminal device. The NEF network element and the SMF network element belong to a same PLMN.

In an optional implementation, that the NEF network element queries the address of the SMF network element from the central network element based on the address of the terminal device includes: The NEF network element sends the address of the terminal device to the central network element; and the central network element determines the address of the SMF network element based on the received address of the terminal device, and sends the address of the SMF network element to the NEF network element. In addition, when this implementation is applied to a case in which the central network element stores the correspondence between the address of the terminal device and the address of the SMF network element, that the central network element determines the address of the SMF network element based on the received address of the terminal device includes: The central network element determines, based on the address of the terminal device, the address of the SMF network element that has the correspondence with the address of the terminal device.

In an optional implementation, before the NEF network element queries the address of the SMF network element from the central network element based on the address of the terminal device, the method further includes: The NEF network element determines that the terminal device is in the HR roaming state. In other words, that the NEF network element determines that the terminal device is in the HR roaming state is used as a trigger condition for the operation that the NEF network element queries the address of the SMF network element from the central network element based on the address of the terminal device. The SMF network element may store the address of the SMF network element in the central network element only when the terminal device is in the HR roaming state. In this case, when the terminal device is in the HR roaming state, the NEF network element can successfully obtain the address of the SMF network element through query from the central network element. However, when the terminal device is in a state other than the HR roaming state, the NEF network element cannot obtain the address of the SMF network element through query from the central network element. In this implementation, when the terminal device is in a state other than the HR roaming state, the NEF network element may not perform the operation of querying the address of the SMF network element from the central network element, thereby reducing signaling overheads.

When the NEF network element determines a status of the terminal device, the NEF network element may determine that the terminal device is in the HR roaming state. A specific manner in which the NEF network element determines the status of the terminal device may be described in the following optional implementation 2.1 to implementation 2.4.

Implementation 2.1: The NEF network element determines the status of the terminal device by determining whether the address of the terminal device belongs to an address segment corresponding to a first PLMN.

Specifically, if the address of the terminal device does not belong to the address segment corresponding to the first PLMN, the NEF network element determines that the terminal device is in the HR roaming state. If the address of the terminal device belongs to the address segment corresponding to the first PLMN, the NEF network element determines that the terminal device is in a non-roaming state or an LBO roaming state. In other words, the address of the terminal device in the HR roaming state does not belong to the address segment corresponding to the first PLMN, and the address of the terminal device in the non-roaming state or the LBO roaming state belongs to the address segment corresponding to the first PLMN.

The first PLMN is a PLMN to which the NEF network element belongs, and the address segment corresponding to the first PLMN is an address segment dedicated to a session in a non-roaming scenario or an LBO roaming scenario. Optionally, the address segment corresponding to the first PLMN may be locally configured by the NEF network element. The address segment corresponding to the first PLMN does not include an address configured by the first PLMN for traffic routed to a local DN in an HR-SBO roaming scenario. In the HR-SBO roaming scenario, if a UPF network element used for routing uses a BP technology, a session has a plurality of addresses. An address configured by the first PLMN is used for traffic routed to the local DN in the session, and an address configured by a second PLMN is used for traffic routed to a DN in the session.

Implementation 2.2: The NEF network element determines the status of the terminal device by determining whether an address of a BSF network element is obtained through query from an NRF network element. The BSF network element is configured to provide an address of a PCF network element for the NEF network element based on the address of the terminal device. The NRF network element, the BSF network element, the PCF network element, and the NEF network element belong to a same PLMN.

Specifically, the NEF network element sends the address of the terminal device to the NRF network element, to query the address of the BSF network element from the NRF network element. If the address of the BSF network element is not obtained through query from the NRF network element, the NEF network element determines that the terminal device is in the HR roaming state. If the address of the BSF network element is obtained through query from the NRF network element, the NEF network element determines that the terminal device is in a non-roaming state or an LBO roaming state. That the NEF network element does not obtain the address of the BSF network element through query from the NRF network element means that the NEF network element fails to query the address of the BSF network element from the NRF network element. That the NEF network element obtains the address of the BSF network element through query from the NRF network element means that the NEF network element successfully obtains the address of the BSF network element through query from the NRF network element.

Implementation 2.3: The NEF network element determines the status of the terminal device by determining whether an address of a PCF network element is obtained through query from a BSF network element, where the BSF network element, the PCF network element, and the NEF network element belong to a same PLMN.

Specifically, the NEF network element sends the address of the terminal device to the BSF network element, to query the address of the PCF network element from the BSF network element. If the address of the PCF network element is not obtained through query from the BSF network element, the NEF network element determines that the terminal device is in the HR roaming state. If the address of the PCF network element is obtained through query from the BSF network element, the NEF network element determines that the terminal device is in a non-roaming state or an LBO roaming state. That the NEF network element does not obtain the address of the PCF network element through query from the BSF network element means that the NEF network element fails to query the address of the PCF network element from the BSF network element. That the NEF network element obtains the address of the PCF network element through query from the BSF network element means that the NEF network element successfully obtains the address of the PCF network element through query from the BSF network element.

When the terminal device is in the non-roaming state or the LBO roaming state, the PCF network element configured to establish the session of the terminal device may send the address of the PCF network element and the address of the terminal device to the BSF network element, and the BSF network element may store a correspondence between the address of the PCF network element and the address of the terminal device. Therefore, when the terminal device is in the non-roaming state or the LBO roaming state, after receiving the address of the terminal device from the NEF network element, the BSF may determine the address of the PCF network element corresponding to the address of the terminal device, and send the address of the PCF network element to the NEF network element. When the terminal device is in the HR roaming state, a second PCF network element (the second PCF network element and the NEF network element belong to different PLMNs) configured to serve the session of the terminal device does not send an address of the second PCF network element and the address of the terminal device to the PCF network element, and the BSF network element does not store a correspondence between the address of the PCF network element and the address of the terminal device. Therefore, when the terminal device is in the HR roaming state, after receiving the address of the terminal device from the NEF network element, the BSF network element does not feed back the address of the PCF network element to the NEF network element. Therefore, the NEF network element may determine the status of the terminal device by determining whether the address of the PCF network element is obtained through query from the BSF network element.

In implementation 2.3, in an optional manner, an address of the BSF network element is configured in the NEF network element. In another optional manner, an address of the BSF network element is sent by an NRF network element to the NEF network element. This manner may be applied to a case in which the central network element is the BSF network element. In this case, after receiving the address of the terminal device and the address of the SMF network element from the SMF network element, the BSF network element may send the address of the terminal device and the address of the BSF network element to the NRF network element. The NRF network element may store the address of the terminal device and the address of the BSF network element. In this way, the NEF network element may query the address of the BSF network element from the NRF network element based on the address of the terminal device.

Implementation 2.4: The NEF network element queries the status of the terminal device from a UDM network element based on the address of the terminal device, where the UDM network element is configured to store the status of the terminal device.

When the terminal device is in the HR roaming state, the HR roaming state of the terminal device stored in the UDM network element may be sent by the SMF network element or the second SMF network element to the UDM network element. Specifically, after determining that the terminal device is in the HR roaming state, the SMF network element or the second SMF network element may send, to the UDM network element, information indicating that the terminal device is in the HR roaming state, so that the UDM network element may store the HR roaming state of the terminal device. When receiving, from the AMF network element, a message indicating that the SMF network element serves the session of the terminal device, the second SMF network element may determine that the terminal device is in the HR roaming state. For specific descriptions of determining, by the SMF network element, that the terminal device is in the HR roaming state, refer to the foregoing optional implementation 1.1 and implementation 1.2. Details are not described herein again.

When the terminal device is in the non-roaming state or the LBO roaming state, the non-roaming state or the LBO roaming state of the terminal device stored in the UDM network element may be sent by the SMF network element to the UDM network element. Specifically, when the SMF network element receives, from the AMF network element, information indicating that the SMF network element serves the session of the terminal device, and the SMF network element does not receive the address of the terminal device from the second SMF network element, the SMF network element may determine that the terminal device is in the non-roaming state or the LBO roaming state, and send, to the UDM network element, information indicating that the terminal device is in the non-roaming state or the LBO roaming state, so that the UDM network element may store the non-roaming state or the LBO roaming state of the terminal device.

In another optional implementation, the NEF network element determines, by determining whether the address of the SMF network element is obtained through query from the central network element, whether to perform step S104 of forwarding the first information from the AF network element to the SMF network element. Specifically, the NEF network element sends the address of the terminal device to the central network element to query the address of the SMF network element. If the NEF network element obtains the address of the SMF network element through query from the central network element, the NEF performs step S 104 based on the address of the SMF network element. If the NEF network element does not obtain the address of the SMF network element through query from the central network element, the NEF network element does not perform step S104. That the NEF network element obtains the address of the SMF network element through query from the central network element means that the NEF network element successfully obtains the address of the SMF network element through query from the central network element. That the NEF network element does not obtain the address of the SMF network element through query from the central network element means that the NEF network element fails to query the address of the SMF network element from the central network element.

S104: The NEF network element forwards the first information from the AF network element to the SMF network element. Correspondingly, the SMF network element receives the first information forwarded by the NEF network element from the AF network element.

In an optional implementation, the method further includes: The AF network element sends the address of the terminal device to the NEF network element; the NEF network element receives the address of the terminal device from the AF network element, and forwards the address of the terminal device to the SMF network element; and the SMF network element receives the address of the terminal device forwarded by the NEF network element from the AF network element. In this implementation, the SMF network element can learn of the terminal device that the AF network element expects the SMF network element to serve, so that after receiving the first information, the SMF network element can serve the session of the terminal device based on the first information, to ensure quality of service of a service.

In addition, after the SMF network element receives, in step S104, the first information forwarded by the NEF network element from the AF network element, the method may further include steps described in the following optional implementations 3.1 to 3.4.

Implementation 3.1: This embodiment of this application is applied to a case in which the first information specifically indicates a service for which an EAS needs to be rediscovered in the session of the terminal device in the EAS rediscovery scenario. The method further includes: The SMF network element determines an impact field (Impact field) based on the first information, and sends the impact field to the second SMF network element; and the second SMF network element receives the impact field from the SMF network element, and initiates a protocol data unit (protocol data unit, PDU) session modification procedure based on the impact field, to implement EAS rediscovery. The second SMF network element is configured to serve the session of the terminal device and belongs to a different PLMN from the SMF network element, and the impact field includes a fully qualified domain name (fully qualified domain name, FQDN) or an EAS IP address of an EAS that needs to be rediscovered.

Implementation 3.2: This embodiment of this application is applied to a case in which the first information specifically indicates an edge relocation service requirement for the session of the terminal device in the edge relocation scenario in which edge relocation is specifically EAS IP address replacement.

In an optional manner, the method further includes: The SMF network element sends, to a UPF network element, a message indicating the UPF network element to perform EAS IP address replacement, and the UPF network element performs EAS IP address replacement after receiving the message. In this manner, after receiving the first information, the SMF network element may directly send, to the UPF network element, the message indicating the UPF network element to perform EAS IP address replacement, instead of requesting another network element whether the SMF network element is allowed to perform this operation, thereby reducing signaling overheads.

In another optional manner, the method further includes: After receiving the first information, the SMF network element requests the second SMF network element whether the SMF network element is allowed to indicate a UPF network element to perform EAS IP address replacement; and when the second SMF network element allows, the SMF network element sends, to the UPF network element, a message indicating the UPF network element to perform EAS IP address replacement. The second SMF network element is configured to serve the session of the terminal device and belongs to a different PLMN from the SMF network element. In this manner, the second SMF network element determines whether the SMF network element is allowed to indicate the UPF network element to perform EAS IP address replacement, so that control of the second SMF network element on the session can be enhanced.

Implementation 3.3: This embodiment of this application is applied to a case in which the first information specifically indicates a policy update requirement for the session of the terminal device in the policy update scenario. The method further includes: The SMF network element sends the first information to the second SMF network element; the second SMF receives the first information from the SMF network element, and sends the first information to a second PCF network element; and the second PCF network element receives the first information from the second SMF network element, and initiates, based on the first information, a PDU session modification procedure for implementing a policy update. Both the second SMF network element and the second PCF network element are configured to serve the session of the terminal device, and a PLMN to which the second SMF network element and the second PCF network element belong is different from the PLMN to which the SMF network element belongs.

For example, the policy update is specifically a QoS policy update. That the second PCF network element initiates, based on the first information, a PDU session modification procedure for implementing the QoS policy update includes: The second PCF network element generates a policy control and charging (policy control and charging, PCC) rule based on the first information, and sends the PCC rule to the second SMF network element. After receiving the PCC rule, the second SMF network element sends a packet detection rule (packet detection rule, PDR) and a QoS enforcement rule (QoS enforcement rule, QER) to a UPF network element, and sends a QoS file and a QoS rule to the SMF network element. The SMF sends the QoS file to a RAN device, and sends the QoS rule to the terminal device.

Implementation 3.4: This embodiment of this application is applied to a case in which the first information specifically indicates a requirement for adding, deleting, or replacing a UPF network element on a user plane path for the session of the terminal device in the user plane path change scenario in which a user plane path change requirement is the requirement for adding, deleting, or replacing the UPF network element on the user plane path. In an optional manner, the method further includes: After receiving the first information, the SMF network element indicates to add, delete, or replace, on a user plane path, a UPF network element configured to serve the terminal device. In another optional manner, the method further includes: After receiving the first information, the SMF network element requests the second SMF network element whether the SMF network element is allowed to indicate to add, delete, or replace, on a user plane path, a UPF network element configured to serve the terminal device; and when the second SMF network element allows, the SMF network element indicates to add, delete, or replace, on the user plane path, the UPF network element configured to serve the terminal device. The second SMF network element is configured to serve the session of the terminal device and belongs to a different PLMN from the SMF network element.

In an optional implementation, for a case in which steps S103 and S104 are not performed when the NEF network element determines that the terminal device is in the non-roaming state or the LBO roaming state, or a case in which step S104 is not performed when the NEF network element does not obtain the address of the SMF network element through query from the central network element, the method further includes: The NEF network element queries the address of the PCF network element from the BSF network element based on the address of the terminal device, and sends the first information to the PCF network element. The PCF network element receives the first information from the NEF network element, and sends the first information to the SMF network element. The SMF network element receives the first information from the PCF network element. The PCF network element, the NEF network element, and the SMF network element belong to a same PLMN. In addition, the first information sent by the PCF network element to the SMF network element may be carried in a PCC rule sent by the PCF network element to the SMF network element. The PCC rule is used to update a policy for a traffic flow in the session of the terminal device. In addition to the first information, the PCC rule may further include an identifier of the rule, a traffic flow template (service data flow template), and the like.

In conclusion, in the communication method 100, the SMF network element may store the address of the terminal device and the address of the SMF network element in the central network element. In this way, the NEF network element can obtain the address of the SMF network element from the central network element, so that the NEF network element can send the first information to the SMF network element. In this way, the first information can be transmitted from the AF network element to the SMF network element, so that the SMF network element can serve the session of the terminal device based on the first information, thereby ensuring quality of service of a service. When the method is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

Refer to FIG. 6. FIG. 6 is a schematic flowchart of a communication method 200 according to an embodiment of this application. The communication method 200 is described from a perspective of interaction between an AF network element, an NEF network element, and an SMF network element. This embodiment may be performed by the AF network element, the NEF network element, and the SMF network element, or may be performed by components (for example, components such as processors, chips, or chip systems) included in the AF network element, the NEF network element, and the SMF network element. The following uses an example in which the AF network element, the NEF network element, and the SMF network element are used as execution bodies for description. The communication method 200 includes the following steps.

S201: The AF network element sends first information to the NEF network element, where the first information indicates a service requirement related to a session of a terminal device. Correspondingly, the NEF network element receives the first information from the AF network element. For specific descriptions of this step, refer to related descriptions of S102 in the communication method 100. Details are not described again.

S202: The NEF network element sends the first information to the SMF network element based on a status of the terminal device or a roaming type supported by the terminal device. Correspondingly, the SMF network element receives the first information from the NEF network element.

In an optional implementation, before the NEF network element sends the first information to the SMF network element based on the status of the terminal device, the method further includes: The NEF network element determines the status of the terminal device. For an optional manner in which the NEF network element determines the status of the terminal device, refer to the descriptions in implementation 2.1 to implementation 2.4 in the communication method 100. Details are not described herein again.

In an optional implementation, before the NEF network element sends the first information to the SMF network element based on the roaming type supported by the terminal device, the method further includes: The NEF network element obtains, through query from a UDM network element, the roaming type supported by the terminal device. Optionally, that the NEF network element obtains, through query from the UDM network element, the roaming type supported by the terminal device includes: The NEF network element sends an identifier of the terminal device to the UDM network element; and the UDM network element determines, based on the identifier of the terminal device, the roaming type supported by the terminal device, and sends the roaming type supported by the terminal device to the NEF network element. Optionally, the identifier of the terminal device may be included by the AF network element in an AF request for sending to the NEF network element.

The identifier of the terminal device may be an address of the terminal device, or the identifier of the terminal device may be a GPSI or a group identifier, or the identifier of the terminal device may be a name (DN name, DNN) of a DN that the terminal device is allowed to access, or the identifier of the terminal device may be single-network slice selection assistance information (single-network slice selection assistance information, S-NSSAI) of a network slice supported by the terminal device, or the identifier of the terminal device may be a combination of a name of a DN that the terminal device is allowed to access and S-NSSAI of a network slice supported by the terminal device, or the identifier of the terminal device may be other information that can identify the terminal device. This is not limited. That the terminal device is allowed to access a DN means that a session and a traffic flow of the terminal device are allowed to enter the DN. In addition, the DN may be identified by using a DNN. In embodiments of this application, an expression "DNN that the terminal device is allowed to access" may be further used to represent "DN that the terminal device is allowed to access".

In addition, when the identifier of the terminal device is the DNN, the S-NSSAI, or the combination of the DNN and the S-NSSAI, for each terminal device that can access the DN corresponding to the DNN, or for each terminal device that supports the network slice corresponding to the S-NSSAI, the operation that the NEF network element sends the first information to the SMF network element based on the roaming type supported by the terminal device may be performed.

Optionally, the roaming type supported by the terminal device is a roaming type supported by the DN that the terminal device is allowed to access. That the NEF network element obtains, through query from the UDM network element, the roaming type supported by the terminal device includes: The NEF network element obtains, through query from the UDM network element, the roaming type supported by the DN that the terminal device is allowed to access.

The terminal device may be allowed to access one or more DNs, and each of the one or more DNs may support one or more roaming types. In addition, roaming types supported by different DNs may be the same or may be different. For example, DNs that the terminal device is allowed to access are a DN #1 and a DN #2. If both the DN #1 and the DN #2 support an LBO roaming type but neither supports an HR roaming type, the terminal device supports the LBO roaming type but does not support the HR roaming type. If both the DN #1 and the DN #2 support an HR roaming type but neither supports an HR roaming type, the terminal device supports the HR roaming type but does not support the HR roaming type. For another example, a DN #1 supports an LBO roaming type but does not support an HR roaming type, a DN #2 supports the HR roaming type but does not support the LBO roaming type, and a DN #3 supports the LBO roaming type and the HR roaming type. If DNs that the terminal device is allowed to access are any two of the DN #1, the DN #2, and the DN #3, or DNs that the terminal device is allowed to access are the DN #1, the DN #2, and the DN #3, the terminal device supports the LBO roaming type and the HR roaming type.

In this case, after determining the roaming type supported by the terminal device, the UDM network element may directly notify the NEF network element of the roaming type supported by the terminal device, or notify the NEF network element of a roaming type supported by each of at least one DN that the terminal device is allowed to access. For example, if a DN #1 that the terminal device is allowed to access supports an LBO roaming type but does not support an HR roaming type, and a DN #2 that the terminal device is allowed to access supports the HR roaming type but does not support the LBO roaming type, the UDM network element may notify the NEF network element that the terminal device supports the LBO roaming type and the HR roaming type, or the UDM network element may notify the NEF network element that the DN #1 that the terminal device is allowed to access supports the LBO roaming type but does not support the HR roaming type, and the DN #2 that the terminal device is allowed to access supports the HR roaming type but does not support the LBO roaming type.

Optionally, the roaming type supported by the terminal device is a roaming type supported by the network slice supported by the terminal device. That the NEF network element obtains, through query from the UDM network element, the roaming type supported by the terminal device includes: The NEF network element obtains, through query from the UDM network element, the roaming type supported by the network slice supported by the terminal device. The terminal device may support one or more network slices, and each of the one or more network slices may support one or more roaming types. In addition, roaming types supported by different network slices may be the same or may be different. This manner is similar to the case in which the roaming type supported by the terminal device is the roaming type supported by the DN that the terminal device is allowed to access. For details, refer to related descriptions in the case in which the roaming type supported by the terminal device is the roaming type supported by the DN that the terminal device is allowed to access.

In addition, in step S202, for various states of the terminal device or various roaming types supported by the terminal device, a specific manner in which the NEF network element sends the first information to the SMF network element may be described in the following optional implementation 4.1 to implementation 4.3.

Implementation 4.1: Case in which the terminal device is in a non-roaming state, or the terminal device is in an LBO roaming state, or the terminal device supports an LBO roaming type. That the terminal device supports the LBO roaming type means that the terminal device supports the LBO roaming type but does not support an HR roaming type.

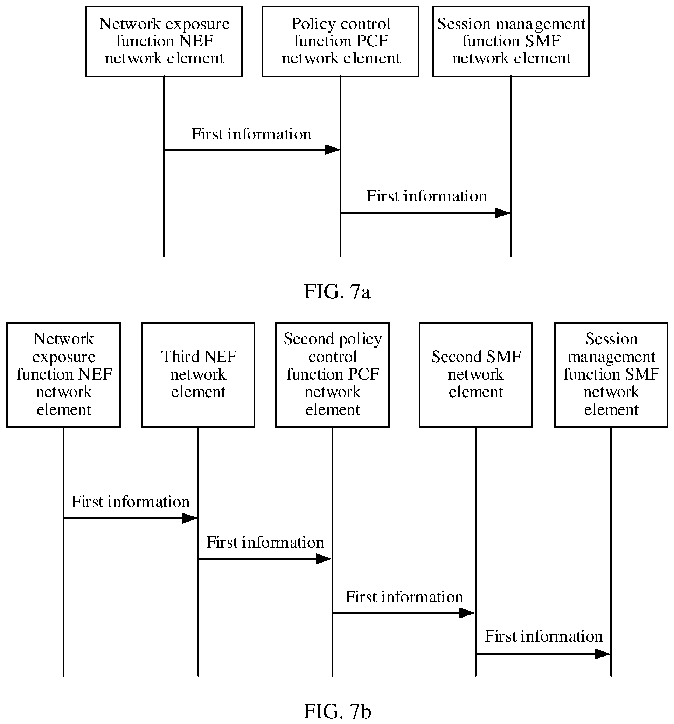

In this case, as shown in FIG. 7a, that the NEF network element sends the first information to the SMF network element includes: The NEF network element sends the first information to a PCF network element; and the PCF network element receives the first information from the NEF network element, and sends the first information to the SMF network element. The NEF network element, the PCF network element, and the SMF network element belong to a first PLMN. When the terminal device is in the non-roaming state, the first PLMN is an HPLMN. When the terminal device is in the LBO roaming state, or when the terminal device supports the LBO roaming type, the first PLMN is a VPLMN. The first information sent by the PCF network element to the SMF network element may be carried in a PCC rule sent by the PCF network element to the SMF network element. For specific descriptions of the PCC rule, refer to related descriptions in the communication method 100. Details are not described again.

Implementation 4.2: Case in which the terminal device is in an HR roaming state, or the terminal device supports an HR roaming type. That the terminal device supports the HR roaming type means that the terminal device supports the HR roaming type but does not support an LBO roaming type.

In this case, in an optional manner, as shown in FIG. 7b, that the NEF network element sends the first information to the SMF network element includes: The NEF network element sends the first information to a third NEF network element; the third NEF network element receives the first information from the NEF network element, and sends the first information to a second PCF network element; the second PCF network element receives the first information from the third NEF network element, and sends the first information to a second SMF network element; and the second SMF network element receives the first information from the second PCF network element, and sends the first information to the SMF network element. The NEF network element and the SMF network element belong to a first PLMN, the third NEF network element, the second PCF network element, and the second SMF network element belong to a second PLMN, the first PLMN is different from the second PLMN, the first PLMN is a VPLMN, and the second PLMN is an HPLMN. Optionally, an address of the third NEF network element is configured in the NEF network element; or an address of the third NEF network element is obtained by the NEF network element from a second NRF network element through an NRF network element, where the NRF network element belongs to the first PLMN, and the second NRF network element belongs to the second PLMN.

In another optional manner, that the NEF network element sends the first information to the SMF network element includes: The NEF network element sends the first information to a UDR network element, and the UDR network element stores the first information, and sends the first information to the SMF network element that subscribes to the first information. In this case, the method further includes: The SMF network element subscribes to the first information from the UDR network element. Alternatively, that the NEF network element sends the first information to the SMF network element includes: The NEF network element sends the first information to a UDR network element, and the UDR network element stores the first information; and the NEF network element obtains the first information from the UDR network element, and sends the first information to the SMF network element that subscribes to the first information. In this case, the method further includes: The SMF network element subscribes to the first information from the NEF network element.

In another optional manner, when the terminal device is in the HR roaming state, that the NEF network element sends the first information to the SMF network element includes: The NEF network element queries an address of the SMF network element from a central network element based on the address of the terminal device, and sends the first information to the SMF network element. In addition, before the NEF network element queries the address of the SMF network element from the central network element, the method further includes: The SMF network element sends the address of the terminal device and the address of the SMF network element to the central network element. For specific descriptions of querying, by the NEF network element, the address of the SMF network element from the central network element, refer to the descriptions of step S103 in the communication method 100. For specific descriptions of sending, by the SMF network element, the address of the terminal device and the address of the SMF network element to the central network element, refer to the descriptions of step S101 in the communication method 100. For specific descriptions of sending, by the NEF network element, the first information to the SMF network element, refer to the descriptions of step S104 in the communication method 100. Details are not described again.

Implementation 4.3: Case in which the terminal device supports an LBO roaming type and an HR roaming type.

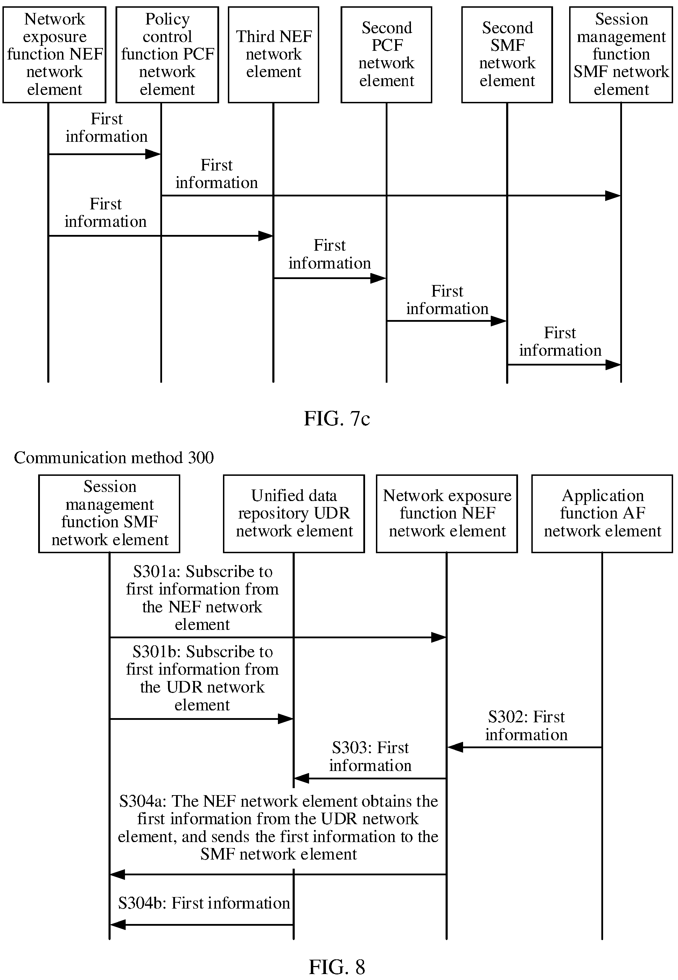

In this case, as shown in FIG. 7c, that the NEF network element sends the first information to the SMF network element includes: The NEF network element sends the first information to a PCF network element, and sends the first information to a third NEF network element. The PCF network element receives the first information from the NEF network element, and sends the first information to the SMF network element. The third NEF network element receives the first information from the NEF network element, and sends the first information to a second PCF network element; the second PCF network element receives the first information from the third NEF network element, and sends the first information to a second SMF network element; and the second SMF network element receives the first information from the second PCF network element, and sends the first information to the SMF network element. The NEF network element, the PCF network element, and the SMF network element belong to a first PLMN, the third NEF network element, the second PCF network element, and the second SMF network element belong to a second PLMN, the first PLMN is different from the second PLMN, the first PLMN is a VPLMN, and the second PLMN is an HPLMN. For specific descriptions of transmitting the first information by the NEF network element to the SMF network element through the PCF network element, refer to related descriptions in implementation 4.1. For specific descriptions of transmitting the first information by the NEF network element to the SMF network element through the third NEF network element, the second PCF network element, and the second SMF network element, refer to related descriptions in implementation 4.2. Details are not described again.

The following provides examples of steps that may be further included in the communication method 200 when this embodiment of this application is applied to scenarios of EAS rediscovery, edge relocation, policy update, and user plane path change, as described in the following optional implementation 5.1 to implementation 5.4.

Implementation 5.1: This embodiment of this application is applied to a case in which the first information indicates a service for which an EAS needs to be rediscovered in the session of the terminal device in the EAS rediscovery scenario.

For a case in which the terminal device is in the non-roaming state or the LBO roaming state or the roaming type supported by the terminal device includes the LBO roaming type in implementation 4.1 and implementation 4.3, after receiving the first information, the SMF network element may further initiate, based on the first information, a PDU session modification procedure for implementing EAS rediscovery. That the SMF network element initiates, based on the first information, the PDU session modification procedure for implementing EAS rediscovery may include: The SMF network element determines an impact field based on the first information, and sends the impact field to the terminal device, and the terminal device may clear domain name system (domain name system, DNS) buffer content related to the impact field stored in the terminal device, to implement ESA rediscovery.

For a case in which the terminal device is in the HR roaming state or the roaming type supported by the terminal device includes the HR roaming type in implementation 4.2 and implementation 4.3, after receiving the first information, the second SMF network element may further initiate, based on the first information, a PDU session modification procedure for implementing EAS rediscovery. That the second SMF network element initiates, based on the first information, the PDU session modification procedure for implementing EAS rediscovery may include: The second SMF network element determines an impact field based on the first information, and sends the impact field to the terminal device through the SMF network element, and the terminal device may clear domain name system (domain name system, DNS) buffer content related to the impact field stored in the terminal device, to implement EAS rediscovery. Alternatively, that the second SMF network element initiates, based on the first information, the PDU session modification procedure for implementing EAS rediscovery may include: The second SMF network element indicates, based on the first information, the SMF network element to determine an impact field, and the SMF network element feeds back the impact field to the second SMF network element after determining the impact field; and the second SMF network element learns of the impact field, and sends the impact field to the terminal device through the SMF network element, and the terminal device may clear domain name system (domain name system, DNS) buffer content related to the impact field stored in the terminal device, to implement ESA rediscovery.

Implementation 5.2: This embodiment of this application is applied to a case in which the first information specifically indicates an EAS IP address replacement requirement for the session of the terminal device in the edge relocation scenario in which edge relocation is specifically EAS IP address replacement.

In an optional manner, for any case described in implementation 4.1 and implementation 4.3, after the SMF network element receives the first information, the method further includes: The SMF network element sends, to a UPF network element, a message indicating the UPF network element to perform EAS IP address replacement, and the UPF network element performs EAS IP address replacement after receiving the message.

In another optional manner, for a case in which the terminal device is in the HR roaming state or the roaming type supported by the terminal device includes the HR roaming type in implementation 4.2 or implementation 4.3, after the second SMF network element receives the first information, the method further includes: The second SMF network element indicates, based on the first information, the SMF network element to send a message to a UPF network element, where the message indicates the UPF network element to perform EAS IP address replacement; and the SMF network element sends, to the UPF network element, the message indicating the UPF network element to perform EAS IP address replacement.

Implementation 5.3: This embodiment of this application is applied to a case in which the first information specifically indicates a policy update requirement for the session of the terminal device in the policy update scenario.

For a case in which the terminal device is in the non-roaming state or the LBO roaming state or the roaming type supported by the terminal device includes the LBO roaming type in implementation 4.1 and implementation 4.3, after receiving the first information, the PCF network element may further initiate, based on the first information, a PDU session modification procedure for implementing a policy update. For example, the policy update is specifically a QoS policy update. That the PCF network element initiates, based on the first information, the PDU session modification procedure for implementing the policy update may include: The PCF network element generates a PCC rule based on the first information, and sends the PCC rule to the SMF network element; and after receiving the PCC rule, the SMF network element sends a PDR and a QER to a UPF network element, sends a QoS file to a RAN device, and sends a QoS rule to the terminal device.

For a case in which the terminal device is in the HR roaming state or the roaming type supported by the terminal device includes the HR roaming type in implementation 4.2 and implementation 4.3, after receiving the first information, the second PCF network element may further initiate, based on the first information, a PDU session modification procedure for implementing a policy update. For specific descriptions of initiating, by the second PCF network element based on the first information, the PDU session modification procedure for implementing the policy update, refer to related descriptions in implementation 3.3 in the communication method 100. Details are not described herein again.

Implementation 5.4: This embodiment of this application is applied to a case in which the first information specifically indicates a requirement for adding, deleting, or replacing a UPF network element on a user plane path for the session of the terminal device in the user plane change scenario in which a user plane change is specifically adding, deleting, or replacing the UPF network element on the user plane path.

In an optional manner, for any case described in implementation 4.1 and implementation 4.3, after the SMF network element receives the first information, the method further includes: The SMF network element indicates to add, delete, or replace, on a user plane path, a UPF network element configured to serve the terminal device.

In another optional manner, for a case in which the terminal device is in the HR roaming state or the roaming type supported by the terminal device includes the HR roaming type in implementation 4.2 or implementation 4.3, after the second SMF network element receives the first information, the method further includes: The second SMF network element indicates, based on the first information, the SMF network element to send a message to a UPF network element, where the message indicates to add, delete, or replace the UPF network element on a user plane path; and the SMF network element sends, to the UPF network element, the message indicating to add, delete, or replace the UPF network element on the user plane path.

In conclusion, in the communication method 200, the NEF network element sends the first information to the SMF network element based on the status of the terminal device or the roaming type supported by the terminal device. The communication method further provides a transmission path for transmitting the first information from the NEF network element to the SMF network element when the terminal device is in each state or the terminal device supports each roaming type, to ensure that the first information can be transmitted from the AF network element to the SMF network element when the terminal device is in each state or the terminal device supports each roaming type, so that the SMF network element can serve the session of the terminal device based on the first information, thereby improving quality of service of a service. The transmission path provided in the communication method includes a path for transmitting the first information from the NEF network element to the SMF network element when the terminal device is in the HR roaming state or the roaming type supported by the terminal device includes the HR roaming type. This helps transmit the first information from the AF network element to the SMF network element in a network including an HR roaming scenario, thereby improving quality of service of a service in the network including the HR roaming scenario.

Refer to FIG. 8. FIG. 8 is a schematic flowchart of a communication method 300 according to an embodiment of this application. The communication method 300 is described from a perspective of interaction between an AF network element, an NEF network element, and an SMF network element. This embodiment may be performed by the AF network element, the NEF network element, and the SMF network element, or may be performed by components (for example, components such as processors, chips, or chip systems) included in the AF network element, the NEF network element, and the SMF network element. The following uses an example in which the AF network element, the NEF network element, and the SMF network element are used as execution bodies for description. The communication method 300 includes the following steps.

S301a: The SMF network element subscribes to first information from the NEF network element, where the first information indicates a service requirement related to a session of a terminal device.

S301b: The SMF network element subscribes to first information from a UDR network element, where the first information indicates a service requirement related to a session of a terminal device.

One of the foregoing steps S301a and S301b is performed.

In an optional implementation, when S301a is performed, the method further includes: The SMF network element sends an identifier of the terminal device to the NEF network element, to notify the NEF network element that the first information subscribed to by the SMF network element is first information corresponding to the terminal device having the identifier. In other words, the first information subscribed to by the SMF network element specifically indicates the service requirement related to the session of the terminal device having the identifier. For specific descriptions of the identifier of the terminal device, refer to related descriptions in the communication method 200. Details are not described herein again.

In another optional implementation, when S301a is performed, the method further includes: The SMF network element sends an identifier of the terminal device to the NEF network element, and sends a DNN and/or S-NSSAI to the NEF network element, where the identifier of the terminal device sent by the SMF network element to the NEF network element is neither the DNN nor the S-NSSAI, and is not a combination of the DNN and the S-NSSAI. In this manner, the NEF network element may be notified that the terminal device corresponding to the first information subscribed to by the SMF network element has the identifier, and the terminal device corresponding to the first information subscribed to by the SMF network element accesses a DN corresponding to the DNN and/or accesses a network slice corresponding to the S-NSSAI. For example, the SMF network element sends a GPSI #1 (the identifier of the terminal device) and a DNN #1 to the NEF network element, to notify the NEF network element that the first information subscribed to by the SMF network element is first information corresponding to a terminal device that has the GPSI #1 and accesses a DN #1 corresponding to the DNN #1. In other words, the first information subscribed to by the SMF network element specifically indicates a service requirement related to a session of the terminal device that has the GPSI #1 and accesses the DN #1.

In an optional implementation, when S301b is performed, the method further includes: The SMF network element sends an identifier of the terminal device to the UDR network element, to notify the UDR network element that the first information subscribed to by the SMF network element is first information corresponding to the terminal device having the identifier. In other words, the first information subscribed to by the SMF network element indicates the service requirement related to the session of the terminal device having the identifier. For specific descriptions of the identifier of the terminal device, refer to related descriptions in the communication method 200. Details are not described herein again.

In another optional implementation, when S301b is performed, the method further includes: The SMF network element sends an identifier of the terminal device to the UDR network element, and sends a DNN and/or S-NSSAI to the UDR network element, where the identifier of the terminal device sent by the SMF network element to the UDR network element is neither the DNN nor the S-NSSAI, and is not a combination of the DNN and the S-NSSAI. In this manner, the UDR network element may be notified that the terminal device corresponding to the first information subscribed to by the SMF network element has the identifier, and the terminal device corresponding to the first information subscribed to by the SMF network element accesses a DN corresponding to the DNN and/or accesses a network slice corresponding to the S-NSSAI. This implementation is similar to the foregoing manner in which the SMF network element sends the identifier of the terminal device to the NEF network element and sends the DNN or the S-NSSAI to the NEF network element. For details, refer to the related descriptions. Details are not described herein again.

In an optional implementation, that the SMF network element subscribes to the first information from the NEF network element or the UDR network element includes: The SMF network element subscribes to the first information from the NEF network element or the UDR network element based on an HR roaming state of the terminal device. In other words, when a condition that the terminal device is in the HR roaming state is satisfied, the SMF network element performs step S301a or S301b. Optionally, the method further includes: The SMF network element determines that the terminal device is in the HR roaming state. For specific descriptions of determining, by the SMF network element, that the terminal device is in the HR roaming state, refer to related descriptions in the communication method 100. Details are not described herein again.

In another optional implementation, before the SMF network element subscribes to the first information from the NEF network element or the UDR network element, the method further includes: The SMF network element receives an address of a second SMF network element from an AMF network element, where the second SMF network element is configured to serve the session of the terminal device, and the second SMF network element and the SMF network element belong to different PLMNs. In other words, that the SMF network element receives the address of the second SMF network element from the AMF network element is used as a trigger condition for the SMF network element to perform step S301a or S301b. For specific descriptions of receiving, by the SMF network element, the address of the second SMF network element from the AMF network element, refer to related descriptions in the communication method 100. Details are not described herein again.

In another optional implementation, before the SMF network element subscribes to the first information from the NEF network element or the UDR network element, the method further includes: The SMF network element receives the address of the terminal device from a second SMF network element, where the second SMF network element is configured to serve the session of the terminal device, and the second SMF network element and the SMF network element belong to different PLMNs. In other words, that the SMF network element receives the address of the terminal device from the second SMF network element is used as a trigger condition for the SMF network element to perform step S301a or S301b. For specific descriptions of receiving, by the SMF network element, the address of the terminal device from the second SMF network element, refer to related descriptions in the communication method 100. Details are not described herein again.

S302: The AF network element sends the first information to the NEF network element. Correspondingly, the NEF network element receives the first information from the AF network element. For specific descriptions of this step, refer to related descriptions of S102 in the communication method 100. Details are not described again.

In an optional implementation, the method further includes: The AF network element sends the identifier of the terminal device to the NEF network element. Correspondingly, the NEF network element receives the identifier of the terminal device from the AF network element. Optionally, the identifier of the terminal device sent by the AF network element to the NEF network element may be carried in an AF request sent by the AF network element to the NEF network element. For specific descriptions of the identifier of the terminal device, refer to related descriptions in the communication method 200. Details are not described herein again.

S303: The NEF network element sends the first information to the UDR network element. Correspondingly, the UDR network element receives the first information from the NEF network element. If S301a is performed, step S304a is further performed after S303 is performed; or if S301b is performed, step S304b is further performed after S303 is performed.

S304a: The NEF network element obtains the first information from the UDR network element, and sends the first information to the SMF network element. Correspondingly, the SMF network element receives the first information from the NEF network element.

S304b: The UDR network element sends the first information to the SMF network element. Correspondingly, the SMF network element receives the first information from the UDR network element.

In addition, in step S304a and step S304b, after the SMF network element receives the first information, operations that may be further included in the method may be as described in the optional implementation 3.1 to implementation 3.4 in the communication method 100. Details are not described herein again.

In conclusion, in the communication method 300, the SMF network element may subscribe to the first information from the NEF network element or the UDR network element. In this way, after obtaining the first information, the NEF network element or the UDR network element may send the first information to the SMF network element that subscribes to the first information. In this way, the first information can be transmitted from the AF network element to the SMF network element, so that the SMF network element can serve the session of the terminal device based on the first information, thereby ensuring quality of service of a service. When the method is applied to an HR roaming scenario, the first information can be directly sent by the NEF network element to the SMF network element, instead of being sent by the NEF network element to the SMF network element via a PCF network element. In this way, the first information can be transmitted from the AF network element to the SMF network element in a network including the HR roaming scenario, so that quality of service of a service in the network including the HR roaming scenario is improved.

To implement functions in the foregoing method provided in embodiments of this application, the SMF network element or the NEF network element may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

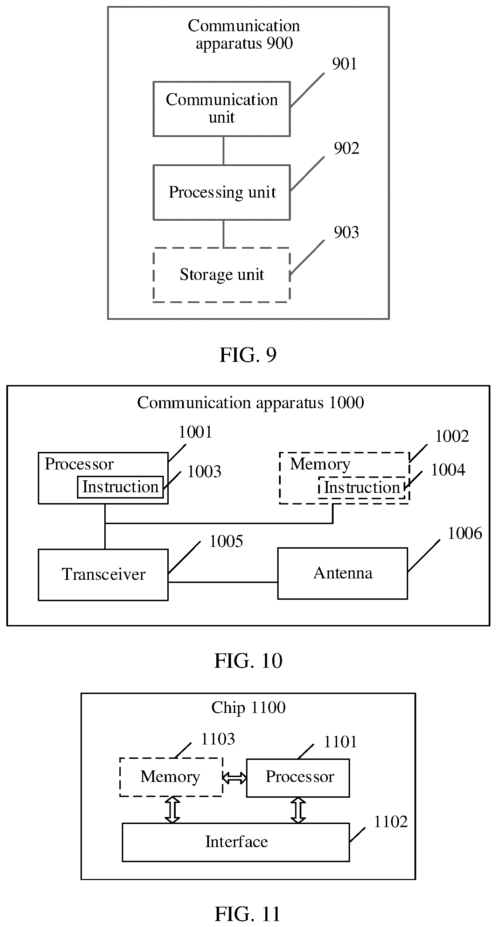

As shown in FIG. 9, an embodiment of this application provides a communication apparatus 900. The communication apparatus 900 may be a component (for example, an integrated circuit or a chip) of an SMF network element or an NEF network element. Alternatively, the communication apparatus 900 may be another communication unit, configured to implement the method in the method embodiments of this application. The communication apparatus 900 may include a communication unit 901 and a processing unit 902. The processing unit 902 is configured to control the communication unit 901 to perform data/signaling receiving and sending. Optionally, the communication apparatus 900 may further include a storage unit 903.

In a possible design, the processing unit 902 is configured to send an address of a terminal device and an address of the communication apparatus 900 to a central network element, and the central network element is configured to provide the address of the communication apparatus 900 for an NEF network element based on the address of the terminal device.

The communication unit 901 is configured to receive first information forwarded by the NEF network element from an AF network element, where the first information indicates a service requirement related to a session of the terminal device.

In an optional implementation, the NEF network element is configured to obtain the address of the communication apparatus 900 from the central network element based on the address of the terminal device, and forward the first information to the communication apparatus 900.

In an optional implementation, the communication unit 901 is further configured to receive the address of the terminal device forwarded by the NEF network element from the AF network element.

In an optional implementation, the central network element is configured to store a correspondence between the address of the terminal device and the address of the communication apparatus 900.

In an optional implementation, the terminal device is in an HR roaming state; and when sending the address of the terminal device and the address of the communication apparatus 900 to the central network element, the communication unit 901 is specifically configured to send the address of the terminal device and the address of the communication apparatus 900 to the central network element based on the HR roaming state of the terminal device.

Optionally, the processing unit 902 is further configured to determine that the terminal device is in the HR roaming state.

In another optional implementation, the communication unit 901 is further configured to: before sending the address of the terminal device and the address of the communication apparatus 900 to the central network element, receive an address of a second SMF network element from an AMF network element, where the second SMF network element is configured to serve the session of the terminal device.

In an optional implementation, the communication unit 901 is further configured to obtain the address of the terminal device from the second SMF network element.

In an optional implementation, the communication apparatus 900 and the central network element belong to a same PLMN.

In an optional implementation, when sending the address of the terminal device and the address of the communication apparatus 900 to the central network element, the communication unit 901 is specifically configured to send the address of the terminal device and the address of the communication apparatus 900 to the central network element through a second NEF network element.

In an optional implementation, the communication unit 901 is further configured to send the first information to the second SMF network element, where the second SMF network element and the communication apparatus 900 belong to different PLMNs, and the second SMF network element is configured to serve the session of the terminal device.

In another possible design, the communication unit 901 is configured to receive first information from an AF network element, where the first information indicates a service requirement related to a session of a terminal device. The processing unit 902 is configured to query an address of an SMF network element from a central network element based on an address of the terminal device. The communication unit 901 is further configured to send the first information to the SMF network element.

In an optional implementation, the processing unit 902 is further configured to: before the querying the address of the SMF network element from the central network element based on the address of the terminal device, determine that the terminal device is in an HR roaming state.

This embodiment of this application and the foregoing communication method 100 are based on a same concept, and bring same technical effects. For a specific principle, refer to the descriptions of the foregoing embodiments. Details are not described again.

In another possible design, the communication unit 901 is configured to receive first information from an AF network element, where the first information indicates a service requirement related to a session of a terminal device; and the communication unit 901 is further configured to send the first information to an SMF network element.

When sending the first information to the SMF network element, the communication unit 901 is specifically configured to send the first information to the SMF network element via a PCF network element, where the terminal device is in a non-roaming state, or the terminal device is in an LBO roaming state, or the terminal device supports an LBO roaming type.

Alternatively, when sending the first information to the SMF network element, the communication unit 901 is specifically configured to send the first information to the SMF network element via a third NEF network element, a second PCF network element, and a second SMF network element, where the terminal device is in an HR roaming state, or the terminal device supports an HR roaming type.

Alternatively, when sending the first information to the SMF network element, the communication unit 901 is specifically configured to send the first information to the SMF network element via a PCF network element, and send the first information to the SMF network element via a third NEF network element, a second PCF network element, and a second SMF network element, where the terminal device supports an LBO roaming type and an HR roaming type.

In an optional implementation, the communication apparatus 900, the PCF network element, and the SMF network element belong to a first PLMN, the third NEF network element, the second PCF network element, and the second SMF network element belong to a second PLMN, and the first PLMN is different from the second PLMN.

In an optional implementation, an address of the terminal device in the non-roaming state or the LBO roaming state belongs to an address segment corresponding to the first PLMN; or an address of the terminal device in the HR roaming state does not belong to an address segment corresponding to the first PLMN.

In an optional implementation, the processing unit 902 is configured to: if the address of the terminal device belongs to the address segment corresponding to the first PLMN, determine that the terminal device is in the non-roaming state or the LBO roaming state; or if the address of the terminal device does not belong to the address segment corresponding to the first PLMN, determine that the terminal device is in the HR roaming state.

In an optional implementation, the terminal device is in the non-roaming state or the LBO roaming state, the processing unit 902 is further configured to obtain, through query, an address of a BSF network element from an NRF network element based on an address of the terminal device, and the BSF network element is configured to provide an address of the PCF network element for the communication apparatus 900 based on the address of the terminal device. Alternatively, the terminal device is in the HR roaming state, and the processing unit 902 is further configured to obtain, through query, no address of a BSF network element from an NRF network element based on an address of the terminal device.

In an optional implementation, the processing unit 902 is further configured to: if the address of the BSF network element is obtained through query from the NRF network element based on the address of the terminal device, determine that the terminal device is in the non-roaming state or the LBO roaming state; or if the address of the BSF network element is not obtained through query from the NRF network element based on the address of the terminal device, determine that the terminal device is in the HR roaming state.

In an optional implementation, the terminal device is in the non-roaming state or the LBO roaming state, and the processing unit 902 is further configured to obtain, through query, an address of the PCF network element from a BSF network element based on an address of the terminal device. Alternatively, the terminal device is in the HR roaming state, and the processing unit 902 is further configured to obtain, through query, no address of the PCF network element from a BSF network element based on an address of the terminal device.

In an optional implementation, the processing unit 902 is further configured to: if the address of the PCF network element is obtained through query from the BSF network element based on the address of the terminal device, determine that the terminal device is in the non-roaming state or the LBO roaming state; or if the address of the PCF network element is not obtained through query from the BSF network element based on the address of the terminal device, determine that the terminal device is in the HR roaming state.

In an optional implementation, the processing unit 902 is further configured to obtain, through query from a UDM network element, a roaming type supported by the terminal device.

In an optional implementation, the roaming type supported by the terminal device is a roaming type supported by a DN that the terminal device is allowed to access. When obtaining, through query from the UDM network element, the roaming type supported by the terminal device, the processing unit 902 is specifically configured to obtain, through query from the UDM network element based on a name of the DN, the roaming type supported by the DN.

This embodiment of this application and the foregoing communication method 200 are based on a same concept, and bring same technical effects. For a specific principle, refer to the descriptions of the foregoing embodiments. Details are not described again.

An embodiment of this application further provides a communication apparatus 1000, as shown in FIG. 10. The communication apparatus 1000 may be an SMF network element or an NEF network element, or may be a chip, a chip system, a processor, or the like that supports an SMF network element or an NEF network element in implementing the foregoing method. The apparatus may be configured to implement the methods described in the foregoing method embodiments. For details, refer to the descriptions in the foregoing method embodiments.

The communication apparatus 1000 may include one or more processors 1001. The processor may be configured to implement some or all functions of the SMF network element or the NEF network element by using a logic circuit or by running a computer program. The processor 1001 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1000 may include one or more memories 1002. The memory may store instructions 1004. The instructions may be run on the processor 1001, so that the communication apparatus 1000 performs the method described in the foregoing method embodiments. Optionally, the memory 1002 may further store data. The processor 1001 and the memory 1002 may be separately disposed, or may be integrated together.

The memory 1002 may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 1000 may further include a transceiver 1005 and an antenna 1006. The transceiver 1005 may be referred to as a transceiver unit, a transceiver machine, a transceiver circuit, or the like, and is configured to implement receiving and sending functions. The transceiver 1005 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, the processor 1001 is configured to send an address of a terminal device and an address of the communication apparatus 1000 to a central network element, and the central network element is configured to provide the address of the communication apparatus 1000 for an NEF network element based on the address of the terminal device.

The transceiver 1005 is configured to receive first information forwarded by the NEF network element from an AF network element, where the first information indicates a service requirement related to a session of the terminal device.

In an optional implementation, the NEF network element is configured to obtain the address of the communication apparatus 1000 from the central network element based on the address of the terminal device, and forward the first information to the communication apparatus 1000.

In an optional implementation, the transceiver 1005 is further configured to receive the address of the terminal device forwarded by the NEF network element from the AF network element.

In an optional implementation, the central network element is configured to store a correspondence between the address of the terminal device and the address of the communication apparatus 1000.

In an optional implementation, the terminal device is in an HR roaming state; and when sending the address of the terminal device and the address of the communication apparatus 1000 to the central network element, the transceiver 1005 is specifically configured to send the address of the terminal device and the address of the communication apparatus 1000 to the central network element based on the HR roaming state of the terminal device.

Optionally, the processor 1001 is further configured to determine that the terminal device is in the HR roaming state.

In another optional implementation, the transceiver 1005 is further configured to: before sending the address of the terminal device and the address of the communication apparatus 1000 to the central network element, receive an address of a second SMF network element from an AMF network element, where the second SMF network element is configured to serve the session of the terminal device.

In an optional implementation, the transceiver 1005 is further configured to obtain the address of the terminal device from the second SMF network element.

In an optional implementation, the communication apparatus 1000 and the central network element belong to a same PLMN.

In an optional implementation, when sending the address of the terminal device and the address of the communication apparatus 1000 to the central network element, the transceiver 1005 is specifically configured to send the address of the terminal device and the address of the communication apparatus 1000 to the central network element through a second NEF network element.

In an optional implementation, the transceiver 1005 is further configured to send the first information to the second SMF network element, where the second SMF network element and the communication apparatus 1000 belong to different PLMNs, and the second SMF network element is configured to serve the session of the terminal device.

In another possible design, the transceiver 1005 is configured to receive first information from an AF network element, where the first information indicates a service requirement related to a session of a terminal device. The processor 1001 is configured to query an address of an SMF network element from a central network element based on an address of the terminal device. The transceiver 1005 is further configured to send the first information to the SMF network element.

In an optional implementation, the processor 1001 is further configured to: before the querying the address of the SMF network element from the central network element based on the address of the terminal device, determine that the terminal device is in an HR roaming state.

In another possible design, the transceiver 1005 is configured to receive first information from an AF network element, where the first information indicates a service requirement related to a session of a terminal device; and the transceiver 1005 is further configured to send the first information to an SMF network element.

When sending the first information to the SMF network element, the transceiver 1005 is specifically configured to send the first information to the SMF network element via a PCF network element, where the terminal device is in a non-roaming state, or the terminal device is in an LBO roaming state, or the terminal device supports an LBO roaming type.

Alternatively, when sending the first information to the SMF network element, the transceiver 1005 is specifically configured to send the first information to the SMF network element via a third NEF network element, a second PCF network element, and a second SMF network element, where the terminal device is in an HR roaming state, or the terminal device supports an HR roaming type.

Alternatively, when sending the first information to the SMF network element, the transceiver 1005 is specifically configured to send the first information to the SMF network element via a PCF network element, and send the first information to the SMF network element via a third NEF network element, a second PCF network element, and a second SMF network element, where the terminal device supports an LBO roaming type and an HR roaming type.

In an optional implementation, the communication apparatus 1000, the PCF network element, and the SMF network element belong to a first PLMN, the third NEF network element, the second PCF network element, and the second SMF network element belong to a second PLMN, and the first PLMN is different from the second PLMN.

In an optional implementation, an address of the terminal device in the non-roaming state or the LBO roaming state belongs to an address segment corresponding to the first PLMN; or an address of the terminal device in the HR roaming state does not belong to an address segment corresponding to the first PLMN.

In an optional implementation, the processor 1001 is configured to: if the address of the terminal device belongs to the address segment corresponding to the first PLMN, determine that the terminal device is in the non-roaming state or the LBO roaming state; or if the address of the terminal device does not belong to the address segment corresponding to the first PLMN, determine that the terminal device is in the HR roaming state.

In an optional implementation, the terminal device is in the non-roaming state or the LBO roaming state, the processor 1001 is further configured to obtain, through query, an address of a BSF network element from an NRF network element based on an address of the terminal device, and the BSF network element is configured to provide an address of the PCF network element for the communication apparatus 1000 based on the address of the terminal device. Alternatively, the terminal device is in the HR roaming state, and the processor 1001 is further configured to obtain, through query, no address of a BSF network element from an NRF network element based on an address of the terminal device.

In an optional implementation, the processor 1001 is further configured to: if the address of the BSF network element is obtained through query from the NRF network element based on the address of the terminal device, determine that the terminal device is in the non-roaming state or the LBO roaming state; or if the address of the BSF network element is not obtained through query from the NRF network element based on the address of the terminal device, determine that the terminal device is in the HR roaming state.

In an optional implementation, the terminal device is in the non-roaming state or the LBO roaming state, and the processor 1001 is further configured to obtain, through query, an address of the PCF network element from a BSF network element based on an address of the terminal device. Alternatively, the terminal device is in the HR roaming state, and the processor 1001 is further configured to obtain, through query, no address of the PCF network element from a BSF network element based on an address of the terminal device.

In an optional implementation, the processor 1001 is further configured to: if the address of the PCF network element is obtained through query from the BSF network element based on the address of the terminal device, determine that the terminal device is in the non-roaming state or the LBO roaming state; or if the address of the PCF network element is not obtained through query from the BSF network element based on the address of the terminal device, determine that the terminal device is in the HR roaming state.

In an optional implementation, the processor 1001 is further configured to obtain, through query from a UDM network element, a roaming type supported by the terminal device.

In an optional implementation, the roaming type supported by the terminal device is a roaming type supported by a DN that the terminal device is allowed to access. When obtaining, through query from the UDM network element, the roaming type supported by the terminal device, the processor 1001 is specifically configured to obtain, through query from the UDM network element based on a name of the DN, the roaming type supported by the DN.

In another possible design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1001 may store instructions 1003, and the instructions 1003 are run on the processor 1001, to cause the communication apparatus 1000 to perform the method described in the foregoing method embodiments. The instructions 1003 may be fixed in the processor 1001. In this case, the processor 1001 may be implemented by hardware.

In another possible design, the communication apparatus 1000 may include a circuit. The circuit may implement the sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be an SMF network element or an NEF network element. However, a range of the communication apparatus described in embodiments of this application is not limited thereto, and a structure of the communication apparatus may not be limited to FIG. 10. The communication apparatus may be an independent device, or may be a part of a larger device. For example, the communication apparatus may be:
(1) an independent integrated circuit IC, a chip, or a chip system or subsystem;
(2) a set of one or more ICs, where optionally, the IC set may also include a storage component configured to store data and instructions;
(3) an ASIC, for example, a modem (modulator);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

For a case in which the communication apparatus may be a chip or a chip system, refer to a diagram of a structure of a chip shown in FIG. 11. A chip 1100 shown in FIG. 11 includes a processor 1101 and an interface 1102. There may be one or more processors 1101, and there may be a plurality of interfaces 1102. The processor 1101 may be a logic circuit, and the interface 1102 may be an input/output interface, an input interface, or an output interface. The chip 1100 may further include a memory 1103.

In a design, a case in which the chip is configured to implement a function of an SMF network element in embodiments of this application is as follows:
The processor 1101 is configured to send an address of a terminal device and an address of the chip 1100 to a central network element, and the central network element is configured to provide the address of the chip 1100 for an NEF network element based on the address of the terminal device.

The interface 1102 is configured to receive first information forwarded by the NEF network element from an AF network element, where the first information indicates a service requirement related to a session of the terminal device.

In another design, a case in which the chip is configured to implement a function of an NEF network element in embodiments of this application is as follows:
In a manner, the interface 1102 is configured to receive first information from an AF network element, where the first information indicates a service requirement related to a session of a terminal device. The processor 1101 is configured to query an address of an SMF network element from a central network element based on an address of the terminal device. The interface 1102 is further configured to send the first information to the SMF network element.

In another manner, the interface 1102 is configured to receive first information from an AF network element, where the first information indicates a service requirement related to a session of a terminal device; and the interface 1102 is further configured to send the first information to an SMF network element.

When sending the first information to the SMF network element, the interface 1102 is specifically configured to send the first information to the SMF network element via a PCF network element, where the terminal device is in a non-roaming state, or the terminal device is in an LBO roaming state, or the terminal device supports an LBO roaming type.

Alternatively, when sending the first information to the SMF network element, the interface 1102 is specifically configured to send the first information to the SMF network element via a third NEF network element, a second PCF network element, and a second SMF network element, where the terminal device is in an HR roaming state, or the terminal device supports an HR roaming type.

Alternatively, when sending the first information to the SMF network element, the interface 1102 is specifically configured to send the first information to the SMF network element via a PCF network element, and send the first information to the SMF network element via a third NEF network element, a second PCF network element, and a second SMF network element, where the terminal device supports an LBO roaming type and an HR roaming type.

In embodiments of this application, the communication apparatus 1000 and the chip 1100 may further perform implementations of the communication apparatus 900. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

This embodiment of this application and the foregoing communication method are based on a same concept, and bring same technical effects. For a specific principle, refer to the descriptions in the foregoing communication method. Details are not described again.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a network exposure function network element, an application function request from an application function network element, wherein the application function request carries first information and an address of a terminal device, and the first information indicates a service requirement related to a session of the terminal device;
obtaining, by the network exposure function network element, an address of a session management function network element based on the address of the terminal device, wherein the session management function network element and the network exposure function network element belong to a same public land mobile network; and
sending, by the network exposure function network element, the first information to the session management function network element based on the address of the session management function network element.

2. The method according to claim 1, wherein before the obtaining, by the network exposure function network element, the address of the session management function network element based on the address of the terminal device, the method further comprises:
determining, by the network exposure function network element, that the terminal device is in a home routed roaming state.

3. The method according to claim 1 or 2, wherein before the obtaining, by the network exposure function network element, the address of the session management function network element, the method further comprises:
receiving, by the network exposure function network element, the address of the terminal device and the address of the session management function network element from the session management function network element.

4. The method according to claim 3, wherein the method further comprises: storing, by the network exposure function network element, a correspondence between the address of the terminal device and the address of the session management function network element; and
the obtaining, by the network exposure function network element, the address of the session management function network element based on the address of the terminal device comprises: obtaining, by the network exposure function network element, the address of the session management function network element based on the address of the terminal device and the correspondence.

5. A communication method, comprising:
determining, by a session management function network element, that the following condition is satisfied: a terminal device is in a home routed HR roaming state, and the session management function network element subscribes to, from a network exposure function network element, information indicating a service requirement, wherein the service requirement is related to a protocol data unit PDU session of the terminal device; and
receiving, by the session management function network element from the network exposure function network element, the information indicating the service requirement.

6. The method according to claim 5, wherein the receiving, by the session management function network element from the NEF network element, the information indicating the service requirement comprises:
directly receiving, by the session management function network element from the network exposure function network element, the information indicating the service requirement, wherein the information indicating the service requirement does not pass through a policy control function network element.

7. The method according to claim 5 or 6, wherein the HR roaming state is an HR PDU session with session breakout roaming state of the terminal device.

8. A communication method, wherein the method comprises:
sending, by a session management function network element, an address of a terminal device and an address of the session management function network element to a network exposure function network element, wherein the SMF session management function network element and the NEF network exposure function network element belong to a same public land mobile network; and
receiving, by the session management function network element, first information forwarded by the network exposure function network element from an application function network element, wherein the first information indicates a service requirement related to a session of the terminal device.

9. The method according to claim 8, wherein the address of the terminal device is used by the NEF network exposure function network element to obtain the address of the SMF session management function network element.

10. The method according to claim 8 or 9, wherein
the network exposure function network element is configured to obtain the address of the session management function network element based on the address of the terminal device, and forward the first information to the session management function network element.

11. The method according to any one of claims 8 to 10, wherein the network exposure function network element is configured to store a correspondence between the address of the terminal device and the address of the session management function network element.

12. The method according to any one of claims 8 to 11, wherein the sending, by the session management function network element, the address of the terminal device and the address of the session management function network element to the network exposure function network element comprises:
when a condition that the terminal device is in an HR home routed roaming state is satisfied, sending, by the session management function network element, the address of the terminal device and the address of the session management function network element to the network exposure function network element.

13. The method according to claim 12, wherein the method further comprises:
determining, by the session management function network element, that the terminal device is in the home routed roaming state.

14. The method according to any one of claims 8 to 13, wherein before the sending, by the session management function network element, the address of the terminal device and the address of the session management function network element to the central network element, the method further comprises:
receiving, by the session management function network element, an address of a second session management function network element from an access and mobility management function network element, wherein the second session management function network element is configured to serve the session of the terminal device.

15. The method according to claim 14, wherein the method further comprises:
obtaining, by the session management function network element, the address of the terminal device from the second session management function network element.

16. The method according to any one of claims 8 to 15, wherein the session management function network element and the central network element belong to a same public land mobile network PLMN.

17. The method according to any one of claims 8 to 16, wherein the sending, by the session management function network element, the address of the terminal device and the address of the session management function network element to the central network element comprises:
sending, by the session management function network element, the address of the terminal device and the address of the session management function network element to the central network element via a second network exposure function network element.

18. The method according to any one of claims 8 to 17, wherein the method further comprises:
sending, by the session management function network element, the first information to the second session management function network element, wherein the second session management function network element and the session management function network element belong to different PLMNs, and the second session management function network element is configured to serve the session of the terminal device.

19. A communication method, wherein the method comprises:
sending, by a session management function session management function network element, an address of a terminal device and an address of the session management function network element to a central network element;
obtaining, by a network exposure function network element, the address of the session management function network element from the central network element based on the address of the terminal device, and forwarding first information from an application function network element to the session management function network element, wherein the first information indicates a service requirement related to a session of the terminal device; and
receiving, by the session management function network element, the first information from the network exposure function network element.

20. A communication system, wherein the system comprises a session management function network element and a network exposure function network element;
the session management function network element is configured to perform the method according to any one of claims 8 to 18; and
the network exposure function network element is configured to perform the method according to any one of claims 1 to 4.

21. The communication system according to claim 20, further comprising:
an application function network element, configured to send an application function request.

22. A communication system, wherein the system comprises an application function network element and a network exposure function network element;
the application function network element is configured to send first information to the network exposure function network element, wherein the first information indicates a service requirement related to a session of a terminal device;
the network exposure function network element is configured to receive the first information from the application function network element; and
the network exposure function network element is further configured to query an address of a session management function session management function network element from a central network element based on an address of the terminal device, and send the first information to the session management function network element.

23. A communication method, wherein the method comprises:
receiving, by a network exposure function network element, first information from an application function application function network element, wherein the first information indicates a service requirement related to a session of a terminal device; and
sending, by the network exposure function network element, the first information to a session management function session management function network element,
wherein
the sending, by the network exposure function network element, the first information to the session management function network element comprises: sending, by the network exposure function network element, the first information to the session management function network element via a policy control function network element, wherein the terminal device is in a non-roaming state, or the terminal device is in a local breakout LBO roaming state, or the terminal device supports an LBO roaming type; or
the sending, by the network exposure function network element, the first information to the session management function network element comprises: sending, by the network exposure function network element, the first information to the session management function network element via a third network exposure function network element, a second policy control function network element, and a second session management function network element, wherein the terminal device is in a home routed HR roaming state, or the terminal device supports an HR roaming type; or
the sending, by the network exposure function network element, the first information to the session management function network element comprises: sending, by the network exposure function network element, the first information to the session management function network element via a policy control function network element, and sending the first information to the session management function network element via a third network exposure function network element, a second policy control function network element, and a second session management function network element, wherein the terminal device supports an LBO roaming type and an HR roaming type.

24. The method according to claim 23, wherein
the network exposure function network element, the policy control function network element, and the session management function network element belong to a first PLMN; and
the third network exposure function network element, the second policy control function network element, and the second session management function network element belong to a second PLMN, and the first PLMN is different from the second PLMN.

25. The method according to claim 23 or 24, wherein
an address of the terminal device in the non-roaming state or the LBO roaming state belongs to an address segment corresponding to the first PLMN; or
an address of the terminal device in the HR roaming state does not belong to an address segment corresponding to the first PLMN.

26. The method according to claim 23 or 24, wherein the terminal device is in the non-roaming state or the LBO roaming state, and the method further comprises: obtaining, by the network exposure function network element through query, an address of a binding support function BSF network element from a network repository function NRF network element based on an address of the terminal device, wherein the BSF network element is configured to provide an address of the policy control function network element for the network exposure function network element based on the address of the terminal device; or
the terminal device is in the HR roaming state, and the method further comprises: obtaining, by the network exposure function network element through query, no address of a BSF network element from an NRF network element based on an address of the terminal device.

27. The method according to claim 23 or 24, wherein the terminal device is in the non-roaming state or the LBO roaming state, and the method further comprises: obtaining, by the network exposure function network element through query, an address of the policy control function network element from a BSF network element based on an address of the terminal device; or
the terminal device is in the HR roaming state, and the method further comprises: obtaining, by the network exposure function network element through query, no address of the policy control function network element from a BSF network element based on an address of the terminal device.

28. The method according to claim 23 or 24, wherein the method further comprises:
obtaining, by the network exposure function network element through query from a unified data management network element, a roaming type supported by the terminal device.

29. The method according to claim 28, wherein the roaming type supported by the terminal device is a roaming type supported by a data network DN that the terminal device is allowed to access; and
the obtaining, by the network exposure function network element through query from the unified data management network element, the roaming type supported by the terminal device comprises:
obtaining, by the network exposure function network element through query from the unified data management network element based on a name of the DN, the roaming type supported by the DN.

30. A communication method, wherein the method comprises:
receiving, by a network exposure function network element, first information from an application function network element, wherein the first information indicates a service requirement related to a session of a terminal device;
sending, by the network exposure function network element, the first information to a session management function session management function network element; and
receiving, by the session management function network element, the first information from the network exposure function network element,
wherein
the sending, by the network exposure function network element, the first information to the session management function network element comprises: sending, by the network exposure function network element, the first information to the session management function network element via a policy control function policy control function network element, wherein the terminal device is in a non-roaming state, or the terminal device is in a local breakout LBO roaming state, or the terminal device supports an LBO roaming type; or
the sending, by the network exposure function network element, the first information to the session management function network element comprises: sending, by the network exposure function network element, the first information to the session management function network element via a third network exposure function network element, a second policy control function network element, and a second session management function network element, wherein the terminal device is in a home routed HR roaming state, or the terminal device supports an HR roaming type; or
the sending, by the network exposure function network element, the first information to the session management function network element comprises: sending, by the network exposure function network element, the first information to the session management function network element via a policy control function network element, and sending the first information to the session management function network element via a third network exposure function network element, a second policy control function network element, and a second session management function network element, wherein the terminal device supports an LBO roaming type and an HR roaming type.

31. A communication system, wherein the system comprises a session management function session management function network element and a network exposure function network element;
the network exposure function network element is configured to receive first information from an application function application function network element, wherein the first information indicates a service requirement related to a session of a terminal device;
the network exposure function network element is further configured to send the first information to the session management function network element; and
the session management function network element is configured to receive the first information from the network exposure function network element,
wherein
when sending the first information to the session management function network element, the network exposure function network element is specifically configured to send the first information to the session management function network element via a policy control function policy control function network element, wherein the terminal device is in a non-roaming state, or the terminal device is in a local breakout LBO roaming state, or the terminal device supports an LBO roaming type; or
when sending the first information to the session management function network element, the network exposure function network element is specifically configured to send the first information to the session management function network element via a third network exposure function network element, a second policy control function network element, and a second session management function network element, wherein the terminal device is in a home routed HR roaming state, or the terminal device supports an HR roaming type; or
when sending the first information to the session management function network element, the network exposure function network element is specifically configured to send the first information to the session management function network element via a policy control function network element, and send the first information to the session management function network element via a third network exposure function network element, a second policy control function network element, and a second session management function network element, wherein the terminal device supports an LBO roaming type and an HR roaming type.

32. A communication apparatus, wherein the apparatus comprises a module or unit configured to implement the method according to any one of claims 1 to 4, or the apparatus comprises a module or unit configured to implement the method according to any one of claims 5 to 7, or the apparatus comprises a module or unit configured to implement the method according to any one of claims 8 to 18, or the apparatus comprises a module or unit configured to implement the method according to any one of claims 23 to 29.

33. A communication apparatus, comprising a memory and a processor, wherein
the memory is configured to store instructions or a computer program; and
the processor is configured to execute the computer program or the instructions stored in the memory, to cause the communication apparatus to perform the method according to any one of claims 1 to 4, or cause the communication apparatus to perform the method according to any one of claims 5 to 7, or cause the communication apparatus to perform the method according to any one of claims 8 to 18, or cause the communication apparatus to perform the method according to any one of claims 23 to 29.

34. A computer-readable storage medium, wherein the computer-readable storage medium stores a computer program, and when the computer program is run, the method according to any one of claims 1 to 4 is implemented, or the method according to any one of claims 5 to 7 is implemented, or the method according to any one of claims 8 to 18 is implemented, or the method according to any one of claims 23 to 29 is implemented.

35. A computer program product, wherein the computer program product comprises computer program code, and when the computer program code is run, the method according to any one of claims 1 to 4 is implemented, or the method according to any one of claims 5 to 7 is implemented, or the method according to any one of claims 8 to 18 is implemented, or the method according to any one of claims 23 to 29 is implemented.
